(19) Europäisches Patentamt
European Patent Office
Office européen des brevets

(11) **EP 4 597 893 A2**

(12) **EUROPEAN PATENT APPLICATION**

(43) Date of publication:
**06.08.2025 Bulletin 2025/32**

(21) Application number: **25165136.0**

(22) Date of filing: **03.03.2022**

(51) International Patent Classification (IPC):
**H04L 1/1867** (2023.01)

(52) Cooperative Patent Classification (CPC):
**H04W 72/21; H04L 1/08; H04L 1/1864;**
**H04L 1/189; H04L 5/0051; H04L 5/0053;**
**H04L 5/0055; H04L 5/0094;** H04L 5/0057

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.03.2021 CN 202110265678**
**02.04.2021 CN 202110359884**

(62) Document number(s) of the earlier application(s) in
accordance with Art. 76 EPC:
**22766211.1 / 4 287 749**

(71) Applicant: **Huawei Technologies Co., Ltd.**
**Shenzhen, Guangdong 518129 (CN)**

(72) Inventors:
• **LIU, Yun**
**Shenzhen, 518129 (CN)**
• **XUE, Yifan**
**Shenzhen, 518129 (CN)**
• **LI, Qiang**
**Shenzhen, 518129 (CN)**
• **XUE, Lixia**
**Shenzhen, 518129 (CN)**

(74) Representative: **Gill Jennings & Every LLP**
**The Broadgate Tower**
**20 Primrose Street**
**London EC2A 2ES (GB)**

Remarks:
•This application was filed on 20-03-2025 as a
divisional application to the application mentioned
under INID code 62.
•Claims filed after the date of receipt of the divisional
application (Rule 68(4) EPC).

(54) **PHYSICAL UPLINK CONTROL CHANNEL TRANSMISSION METHOD, TERMINAL DEVICE, AND NETWORK DEVICE**

(57) Embodiments of this application provide a physical uplink control channel transmission method, a terminal device, and a network device. When the network device does not configure a dedicated PUCCH for the terminal device, repeated transmission of a PUCCH is provided, to improve a success rate of information transmission in a communication process, and improve communication transmission efficiency. This can effectively resolve a problem of low communication transmission efficiency in a coverage enhancement scenario in this case.

FIG. 3

## Description

This application claims priority to Chinese Patent Application No. 202110265678.2, filed with the China National Intellectual Property Administration on March 11, 2021 and entitled "METHOD FOR DETERMINING REPETITION QUANTITY OF PUCCH", and to Chinese Patent Application No. 202110359884.X, filed with the China National Intellectual Property Administration on April 2, 2021 and entitled "PHYSICAL UPLINK CONTROL CHANNEL TRANSMISSION METHOD, TERMINAL DEVICE, AND NETWORK DEVICE", which are incorporated herein by reference in their entireties.

## TECHNICAL FIELD

This application relates to the communication field, and more specifically, to a physical uplink control channel transmission method, a terminal device, and a network device in the communication field.

## BACKGROUND

In a communication system, due to a limitation of costs of a terminal device, a power upper limit of the terminal device is lower than a power upper limit of a network device. Therefore, a coverage area of uplink transmission is usually smaller than a coverage area of downlink transmission. Therefore, there are some cases in which the coverage area is limited in the uplink transmission. As a result, strength of a transmitted signal cannot meet a communication requirement, and transmission efficiency in a communication process is affected.

In addition, for physical uplink control channel (physical uplink control channel, PUCCH) transmission in the uplink transmission, in some scenarios (for example, a random access process) in which the network device does not complete configuration of a dedicated PUCCH based on higher layer signaling, for some scenarios in which the coverage area is limited, a current technology does not provide a specific solution. Therefore, the transmission efficiency in the communication process is affected to some extent.

## SUMMARY

Embodiments of this application provide a physical uplink control channel transmission method, a terminal device, and a network device. When the network device does not configure a dedicated PUCCH for the terminal device, repeated transmission of a PUCCH is provided, to improve a success rate of information transmission in a communication process, and improve communication transmission efficiency. This can effectively resolve a problem of low communication transmission efficiency in a coverage enhancement scenario in this case.

According to a first aspect, a physical uplink control channel transmission method is provided and includes:

receiving a first message; and
when a dedicated physical uplink control channel PUCCH is not configured for a terminal device, repeatedly transmitting a first PUCCH by using a repetition quantity N, where the dedicated PUCCH is configured by a network device for the terminal device based on higher layer signaling, and N is an integer greater than 1.

The first PUCCH carries feedback information, and the feedback information indicates whether the terminal device successfully receives the first message, or the feedback information is channel quality-related information determined based on the first message; or the first PUCCH is determined based on the first message.

In some embodiments, the first message and the first PUCCH are respectively a message and a PUCCH in a random access process. For example, the first message is a message 4 (Msg4) in the random access process, and the first PUCCH carries feedback information for the Msg4, that is, the feedback information indicates whether the terminal device successfully receives the Msg4.

In some other embodiments, the first message and the first PUCCH are respectively a message and a PUCCH in an RRC signaling configuration process. For example, the first message is RRC signaling, the first PUCCH carries feedback information for the RRC signaling, the feedback information may be feedback information sent by a physical layer of the terminal device, and the feedback information indicates whether the terminal device successfully receives the RRC signaling, or in other words, the feedback information indicates whether the terminal device successfully receives a physical downlink shared channel (physical downlink shared channel, PDSCH) carrying the RRC signaling.

In some other embodiments, the first message and the first PUCCH are respectively a message and a PUCCH in a channel measurement process.

For example, the first message may be a channel measurement request, the first PUCCH carries feedback information that is related to channel quality and that is determined based on the channel measurement request, and the feedback information may include a CSI measurement result or a transmit beam.

In some other embodiments, the first message may be indication information indicating a transmission resource occupied by a PUCCH carrying an SR. The first PUCCH is determined based on the indication information. That is, a transmission resource occupied by the first PUCCH is obtained based on the indication information.

According to the physical uplink control channel transmission method provided in this embodiment of this application, when the network device does not configure the dedicated PUCCH for the terminal device, the terminal device may repeatedly transmit, by using the repetition quantity N, the first PUCCH related to the first message. In this way, a success rate of transmission of the first PUCCH can be improved, to improve communication transmission efficiency, and a problem of low communication transmission efficiency in a coverage enhancement scenario can be effectively resolved.

Optionally, the first message includes first indication information, and the first indication information is used for determining the repetition quantity N.

Optionally, the first indication information includes a first index, the first index indicates the repetition quantity N, the first index further indicates a first modulation and coding scheme MCS, and the first MCS is used for demodulating at least a part of content of the first message.

According to the physical uplink control channel transmission method provided in this embodiment of this application, the first MCS is associated with the repetition quantity N of the first PUCCH, and the first index indicating the first MCS is also used for indicating the repetition quantity N of the first PUCCH, that is, the first index indicating the first MCS is reused. This can not only completely implement an indication of an existing MCS, but also reduce an additional quantity of bits that are added because the repetition quantity N is separately indicated, so that signaling overheads are reduced.

Optionally, the first index is an index in an MCS table, and a maximum quantity of bits occupied by the first index is less than 5.

The first index is any index in the MCS table.

According to the physical uplink control channel transmission method provided in this embodiment of this application, the first index is any index in the MCS table, and when the maximum quantity of bits occupied by the first index is less than 5, it means that, in comparison with a case in which a quantity of bits occupied by an index in an MCS table in a conventional technology is at least equal to 5, in the MCS table in this embodiment of this application, some MCSs indicated by indexes with larger values are deleted, and some MCSs indicated by indexes with smaller values are retained. First, a quantity of occupied bits can be reduced by deleting MCSs in an MCS table, so that a waste of resources can be reduced. Second, because a high-performance MCS may not be needed in the coverage enhancement scenario, the MCSs deleted from the MCS table basically have no impact on communication transmission in the coverage enhancement scenario, so that the communication transmission in the coverage enhancement scenario can be completely implemented.

Optionally, the first indication information is carried in a first part of bits in an MCS field of downlink control information DCI.

The MCS field further includes a second part of bits, the second part of bits carries MCS information indicating a first MCS, and the first MCS is used for demodulating at least a part of content of the first message.

The first indication information includes a first index indicating the repetition quantity N, the MCS information includes a second index indicating the first MCS, the second index is an index in an MCS table, and a maximum quantity of bits occupied by the second index is less than 5.

The second index is any index in the MCS table.

Therefore, according to the physical uplink control channel transmission method provided in this embodiment of this application, the second index is any index in the MCS table, and when the maximum quantity of bits occupied is less than 5, it means that, in comparison with an existing MCS table in which a maximum quantity of bits occupied by an index is 5, in the MCS table in this embodiment, some MCSs indicated by indexes with larger values are deleted, and some MCSs indicated by indexes with smaller values are retained. First, a quantity of occupied bits can be reduced by deleting MCSs in an MCS table, so that a waste of resources can be reduced. Second, because a high-performance MCS may not be needed in the coverage enhancement scenario, the MCSs deleted from the MCS table basically have no impact on communication transmission in the coverage enhancement scenario, so that the communication transmission in the coverage enhancement scenario can be completely implemented. Third, on this basis, the repetition quantity N of the first PUCCH can be additionally indicated in an existing MCS field, and the existing MCS field is reused for further reducing the waste of resources.

Optionally, the first indication information indicates a first value, and the first value is related to the repetition quantity N.

According to the physical uplink control channel transmission method provided in this embodiment of this application, the first value is associated with the repetition quantity N of the first PUCCH, and the terminal device may obtain the repetition quantity N based on the first value indicated by the first indication information. In comparison with a case in which the first indication information includes N, to some extent, a quantity of bits can be effectively reduced, to reduce signaling overheads.

Optionally, the first value and the repetition quantity N meet any one of the following relationships: $N=2^x$; or $N=2+x$, where x is the first value.

Optionally, the first indication information indicates a total quantity of symbols occupied for repeated transmission of the first PUCCH, and the repetition quantity N is related to the total quantity of symbols and a quantity of symbols occupied for single transmission of the first PUCCH.

According to the physical uplink control channel transmission method provided in this embodiment of this application, the repetition quantity N of the first PUCCH is associated with the total quantity of symbols occupied for the repeated transmission of the first PUCCH, and the terminal device may obtain the repetition quantity N based on the total quantity of symbols indicated by the network device. In this manner, a quantity of symbols occupied for single transmission of a PUCCH in an existing standard PUCCH resource may be modified to a total quantity of symbols. This slightly changes an existing PUCCH resource, and is easy for implementation.

Optionally, the first indication information indicates the repetition quantity N.

Optionally, the first indication information is carried in a system message.

Optionally, the first indication information is carried in DCI.

Optionally, the first message is a message 4 in a random access process; and

the repetition quantity N is related to a repetition quantity M used by the terminal device to repeatedly send a message 3 in the random access process, and M is a positive integer greater than 1.

According to the physical uplink control channel transmission method provided in this embodiment of this application, the repetition quantity M of the message 3 in the random access process is associated with the repetition quantity N of the first PUCCH, and the repetition quantity N can be determined based on the repetition quantity M. In comparison with a manner in which the repetition quantity N is determined using signaling, overheads caused by signaling transmission can be effectively reduced.

Optionally, the repetition quantity N is equal to the repetition quantity M; or

the repetition quantity N is related to the repetition quantity M and a preset value.

Optionally, the repetition quantity M is a repetition quantity for initial transmission of the message 3;

the repetition quantity M is a repetition quantity for retransmission of the message 3; or
the repetition quantity M is a sum of a repetition quantity for initial transmission of the message 3 and a repetition quantity for retransmission of the message 3.

Optionally, capability information is sent, where the capability information indicates that the terminal device supports or is in a coverage enhancement scenario.

According to the physical uplink control channel transmission method provided in this embodiment of this application, the terminal device sends the capability information to the network device. First, the network device may determine whether the terminal device needs coverage enhancement, when the coverage enhancement is needed, the terminal device may send the first indication information used for determining the repetition quantity N, and when the coverage enhancement is not needed, may not send the first indication information. In this way, unnecessary signaling overheads can be reduced. Second, when the terminal device determines the repetition quantity N, the network device may also learn, based on the capability information, that there is a high probability that the terminal device repeatedly sends the first PUCCH, to identify a first PUCCH repeatedly sent.

Optionally, the capability information includes at least one of the following:

a preamble sequence that is in a message 1 in the random access process and that corresponds to the coverage enhancement scenario;
a format of a demodulation reference signal DMRS that is in the message 3 in the random access process and that corresponds to coverage enhancement, or uplink control information that is in the message 3 and that corresponds to coverage enhancement; or
the repetition quantity M for repeated sending of the message 3 in the random access process, where M is a positive integer greater than 1.

Optionally, in N times of repeated transmission of the first PUCCH, a resource occupied for an $(N-1)^{th}$ time of transmission of the first PUCCH is offset by m1 frequency domain units relative to a resource occupied for first transmission, where the $(N-1)^{th}$ time of transmission is transmission after the first transmission, and m1 is a positive integer greater than 0.

According to the physical uplink control channel transmission method provided in this embodiment of this application, the resource occupied for the $(N-1)^{th}$ time of transmission of the first PUCCH is separated from a frequency domain of the resource occupied for the first transmission. This not only provides a resource for a scenario in which a PUCCH is repeatedly transmitted, but also can reduce a conflict between a resource occupied for repeated transmission of the PUCCH and an existing resource occupied for one transmission of the PUCCH.

Optionally, a resource occupied for an $N^{th}$ time of repeated transmission of the first PUCCH is offset by m2 frequency domain units relative to a reference frequency domain unit, where m2 is a positive integer greater than 0.

According to the physical uplink control channel transmission method provided in this embodiment of this application, the resource occupied for the $N^{th}$ time of transmission of the first PUCCH is separated from the reference frequency domain unit, to provide a resource for a scenario in which a PUCCH is repeatedly transmitted.

According to a second aspect, a physical uplink control channel transmission method is provided and includes:

sending a first message; and

when a dedicated physical uplink control channel PUCCH is not configured for a terminal device, repeatedly receiving a first PUCCH by using a repetition quantity N, where the dedicated PUCCH is configured by a network device for the terminal device based on higher layer signaling, and N is an integer greater than 1.

The first PUCCH carries feedback information, and the feedback information indicates whether the terminal device successfully receives the first message, or the feedback information is channel quality-related information determined based on the first message; or the first PUCCH is determined based on the first message.

Optionally, the first message includes first indication information, and the first indication information is used for determining the repetition quantity N.

Optionally, the first indication information includes a first index, the first index indicates the repetition quantity N, the first index further indicates a first modulation and coding scheme MCS, and the first MCS is used for demodulating at least a part of content of the first message.

Optionally, the first index is an index in an MCS table, and a maximum quantity of bits occupied by the first index is less than 5.

Optionally, the first indication information is carried in a first part of bits in an MCS field of downlink control information DCI.

The MCS field further includes a second part of bits, the second part of bits carries MCS information indicating a first MCS, and the first MCS is used for demodulating at least a part of content of the first message.

The first indication information includes a first index indicating the repetition quantity N, the MCS information includes a second index indicating the first MCS, the second index is an index in an MCS table, and a maximum quantity of bits occupied by the second index is less than 5.

Optionally, the first indication information indicates a first value, and the first value is related to the repetition quantity N.

Optionally, the first value and the repetition quantity N meet any one of the following relationships: $N=2^{\wedge}x$; or $N=2+x$, where x is the first value.

Optionally, the first indication information indicates a total quantity of symbols occupied for repeated transmission of the first PUCCH, and the repetition quantity N is related to the total quantity of symbols and a quantity of symbols occupied for single transmission of the first PUCCH.

Optionally, the first indication information indicates the repetition quantity N.

Optionally, the first indication information is carried in DCI.

Optionally, the method further includes:

sending a system message, where the system message includes second indication information indicating the repetition quantity N.

Optionally, the first message is a message 4 in a random access process.

The repetition quantity N is related to a repetition quantity M used by the terminal device to repeatedly send a message 3 in the random access process, and M is a positive integer greater than 1.

Optionally, the repetition quantity N is equal to the repetition quantity M; or the repetition quantity N is related to the repetition quantity M and a preset value.

Optionally, the repetition quantity M is a repetition quantity for initial transmission of the message 3;

the repetition quantity M is a repetition quantity for retransmission of the message 3; or the repetition quantity M is a sum of a repetition quantity for initial transmission of the message 3 and a repetition quantity for retransmission of the message 3.

Optionally, the method further includes:

receiving capability information, where the capability information indicates that the terminal device supports or is in a coverage enhancement scenario.

Optionally, the capability information includes at least one of the following:

a preamble sequence that is in a message 1 in the random access process and that corresponds to the coverage enhancement scenario;

a format of a demodulation reference signal DMRS that is in the message 3 in the random access process and that corresponds to coverage enhancement, or uplink control information that is in the message 3 and that corresponds to coverage enhancement; or

the repetition quantity M for repeated sending of the message 3 in the random access process, where M is a positive integer greater than 1.

Optionally, in N times of repeated transmission of the first PUCCH, a resource occupied for an $(N-1)^{th}$ time of transmission of the first PUCCH is offset by m1 frequency domain units relative to a resource occupied for first transmission, where the $(N-1)^{th}$ time of transmission is transmission after the first transmission, and m1 is a positive integer greater than 0.

Optionally, a resource occupied for an $N^{th}$ time of repeated transmission of the first PUCCH is offset by m2 frequency domain units relative to a reference frequency domain unit, where m2 is a positive integer greater than 0.

According to a third aspect, a terminal device is provided, where the apparatus is configured to perform the method provided in the first aspect. Specifically, the apparatus may include a module configured to perform any possible implementation in the first aspect.

According to a fourth aspect, a network device is provided, where the apparatus is configured to perform the method provided in the second aspect. Specifically, the apparatus may include a module configured to perform any possible implementation in the second aspect.

According to a fifth aspect, a terminal device is provided and includes a processor. The processor is coupled to a memory, and may be configured to execute instructions in the memory, to implement the method in any possible implementation in the first aspect. Optionally, the apparatus further includes the memory. Optionally, the apparatus further includes a communication interface, and the processor is coupled to the communication interface.

According to a sixth aspect, a network device is provided and includes a processor. The processor is coupled to a memory, and may be configured to execute instructions in the memory, to implement the method in any possible implementation in the second aspect. Optionally, the apparatus further includes the memory. Optionally, the apparatus further includes a communication interface, and the processor is coupled to the communication interface.

According to a seventh aspect, a computer-readable storage medium is provided. The computer-readable storage medium stores a computer program. When the computer program is executed by an apparatus, the apparatus is enabled to implement the method in any possible implementation in the first aspect or the second aspect.

According to an eighth aspect, a computer program product including instructions is provided. When the instructions are executed by a computer, an apparatus is enabled to implement the method in any possible implementation in the first aspect or the second aspect.

According to a ninth aspect, a chip is provided and includes: an input interface, an output interface, a processor, and a memory. The input interface, the output interface, the processor, and the memory are connected through an internal connection path, the processor is configured to execute code in the memory, and when the code is executed, the processor is configured to perform the method in any possible implementation in the first aspect or the second aspect.

**BRIEF DESCRIPTION OF DRAWINGS**

FIG. 1 is a schematic diagram of a structure of a communication system according to an embodiment of this application;

FIG. 2 is a schematic flowchart of a random access process according to an embodiment of this application;

FIG. 3 is a schematic flowchart of a physical uplink control channel transmission method according to an embodiment of this application;

FIG. 4 is a schematic block diagram of an apparatus according to an embodiment of this application; and

FIG. 5 is a schematic diagram of a structure of an apparatus according to an embodiment of this application.

**DESCRIPTION OF EMBODIMENTS**

The following describes the technical solutions in this application with reference to the accompanying drawings.

The technical solutions according to embodiments of this application is applicable to various communication systems, for example, a long term evolution (Long Term Evolution, LTE) system, an LTE frequency division duplex (Frequency Division Duplex, FDD) system, and an LTE time division duplex (Time Division Duplex. TDD), a 5th generation (5th Generation, 5G) system, a new radio (New Radio, NR), or a future 6th generation (6th Generation, 6G) system.

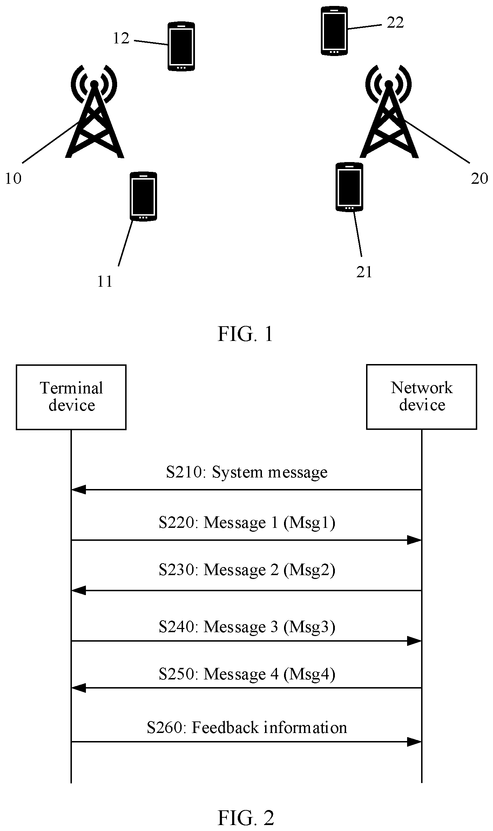

FIG. 1 is a schematic diagram of a structure of a communication system according to an embodiment of this application. The communication system includes one or more network devices (where, for ease of description, a network device 10 and a network device 20 are shown in the figure), and one or more terminal devices that communicate with the one or more network devices. A terminal device 11 and a terminal device 12 shown in FIG. 1 communicate with the network device 10, and a terminal device 21 and a terminal device 22 shown in FIG. 1 communicate with the network device 20.

The terminal device in embodiments of this application is a device with a wireless transceiver function, and may be deployed on land, including an indoor device or an outdoor device, a handheld device, a wearable device, or a vehicle-mounted device; or may be deployed on a water surface (for example, on a ship); or may be deployed in the air (for example, on a plane, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in a self driving (self driving), a wireless terminal in a remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. An application scenario is not limited in embodiments of this application. Alternatively, a terminal sometimes may also be referred to as a terminal device, user equipment (user equipment, UE), an access terminal device, a vehicle-mounted terminal, an industrial control terminal, a UE unit, a UE station, a mobile station, a remote station, a remote terminal device, a mobile device, a UE terminal device, a terminal device, a wireless communication device, a UE agent, a UE apparatus, or the like. Alternatively, the terminal device may be fixed or mobile.

The network device in embodiments of this application may be a device configured to communicate with the terminal device, or is any device with a wireless transceiver function. The network device includes but is not limited to an evolved NodeB (NodeB or eNB or e-NodeB, evolved NodeB) in LTE, a base station (gNodeB or gNB) or a transmission reception point (transmission receiving point/transmission reception point, TRP) in NR, an access node in a Wi-Fi system, a wireless relay node, a wireless backhaul node, or the like. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. Alternatively, the network device may be a radio controller, a CU, and/or a DU in a cloud radio access network (cloud radio access network, CRAN) scenario. Alternatively, the network device may be a server, a wearable device, a vehicle-mounted device, or the like. The following uses an example in which the network device is a base station for description. The plurality of network devices may be base stations of a same type, or may be base stations of different types. The base station may communicate with the terminal device, or may communicate with the terminal device through a relay station. The terminal device may communicate with a plurality of base stations using different technologies. For example, the terminal device may communicate with a base station supporting an LTE network, or may communicate with a base station supporting a 5G network, and may further support dual connections to a base station in an LTE network and a base station in a 5G network.

As described in the background, because a coverage area of uplink transmission is limited, coverage strength of a signal cannot meet a communication requirement, and transmission efficiency in a communication process is affected. In addition, when the network device does not configure a dedicated physical uplink control channel (dedicated physical uplink control channel, dedicated PUCCH) for the terminal device, no specific solution is provided in a conventional technology. Therefore, when the transmission efficiency is low due to the limited coverage area of uplink transmission, coverage enhancement (coverage enhancement, CE) needs to be performed on uplink transmission communication, to improve the transmission efficiency.

For ease of description, scenarios in which the coverage enhancement needs to be performed in embodiments of this application are collectively referred to as coverage enhancement scenarios.

On this basis, an embodiment of this application provides a physical uplink control channel transmission method. When the network device does not configure the dedicated PUCCH for the terminal device, repeated transmission of a PUCCH is provided, to improve a success rate of information transmission in the communication process, and improve communication transmission efficiency. This can effectively resolve a problem of low communication transmission efficiency in a coverage enhancement scenario in this case.

It should be understood that, for another description, because the PUCCH carries information, the repeated transmission of the PUCCH may also be understood as repeated transmission of the information carried on the PUCCH. Explanations for the repeated transmission of the PUCCH in the following are the same as those described herein. For brevity, details are not described subsequently.

The dedicated PUCCH represents a PUCCH configured by the network device for the terminal device based on radio resource control (radio resource control, RRC) signaling. The following briefly describes a process in which the network device configures the RRC signaling.

After the terminal device accesses a network in a random access process, the network device configures the RRC signaling and sends the RRC signaling to the terminal device, where a dedicated PUCCH resource is configured in the RRC signaling. If the terminal device successfully receives the RRC signaling at a physical layer, the terminal device sends one piece of feedback information to the network device, to notify that the terminal device successfully receives the RRC signaling at the physical layer. If the terminal device does not successfully receive the RRC signaling at the physical layer, the terminal device may also send one piece of feedback information to the network device, to notify that the terminal device does not successfully receive the RRC signaling at the physical layer. The network device repeatedly sends the RRC signaling based on a preset quantity of times until the terminal device successfully receives the RRC signaling at the physical layer. After the terminal device successfully receives the RRC signaling at the physical layer, the terminal device continues to deliver the RRC signaling from the physical layer to an RRC layer. After successfully receiving the RRC signaling at the RRC layer, the terminal device sends another piece of feedback information to the network device through the RRC layer, to notify the network device that the terminal device completes configuration of the RRC signaling at the RRC layer. In this way, the RRC signaling is successfully configured, which means that the network device completes configuration of a dedicated PUCCH resource. Subsequently, when a specific terminal device needs to transmit information over a PUCCH, the network device may schedule the dedicated PUCCH in the dedicated PUCCH resource in the RRC signaling for the terminal device over a physical downlink control channel (downlink control information, DCI).

It should be understood that, in embodiments of this application, only after the terminal device sends, to the network device through the RRC layer, the feedback information indicating that the terminal device completes configuration of the RRC signaling at the RRC layer, the network device can be considered to complete configuration of the dedicated PUCCH, that is, the network device is considered to configure the dedicated PUCCH for the terminal device.

The technical solutions in embodiments of this application relate to a scenario in which no dedicated PUCCH is configured for a terminal device, to be specific, to various scenarios, including but not limited to a random access (random access, RA) process, an RRC signaling configuration process, a channel measurement process, and the like before a network device successfully configures RRC signaling. The following describes scenarios that may be involved in embodiments of this application.

## 1. Random access process

FIG. 2 is a schematic flowchart of a random access process according to an embodiment of this application; In S210, a network device broadcasts a system message in a cell. Correspondingly, a terminal device receives the system message.

The system message includes information indicating a time-frequency resource occupied by the terminal device to send a message 1 (message1, Msg1 for short).

For example, the system message further includes cell bandwidth information in uplink transmission and downlink transmission, slot configuration information in the uplink transmission and the downlink transmission, and the like.

In S220, the terminal device sends the message 1 (Msg1). Correspondingly, the network device receives the Msg1.

The Msg1 includes a random access preamble sequence. The random access preamble sequence is used for notifying the network device of a random access request, and can also enable the network device to estimate a transmission delay between the network device and the terminal device and calibrate an uplink sending time point of the terminal device based on the transmission delay.

The terminal device sends, based on the time-frequency resource indicated by the system message, the Msg1 on the time-frequency resource.

In S230, the network device sends a message 2 (message2, Msg2 for short). Correspondingly, the terminal device receives the Msg2.

The Msg2 is a response message of the Msg1, and the Msg2 may also be referred to as a random access response message. The Msg2 is carried on a downlink shared channel (downlink shared channel, DL-SCH).

For example, the Msg2 may include the following content:

an index value of a random access preamble sequence detected by the network device, to indicate a random access for which the Msg2 is valid;
a scheduling indication, to indicate a resource used by the terminal device to send a message 3 in a random access process; and
a temporary identifier, used for further communication between the terminal device and the network device. For example, the temporary identifier may be a temporary cell radio network temporary identifier (temporary cell radio network temporary identifier, TC-RNTI). After S250 is completed, the temporary identifier may become a unique identifier, which is referred to as a cell radio network temporary identifier (cell radio network temporary identifier, C-RNTI).

If the network device detects a plurality of random access attempts (from different terminal devices), response messages for a plurality of terminal devices may be integrated into one Msg2, and an identifier dedicated to a random access response is used, that is, a random access radio network temporary identifier (random access radio network temporary identifier, RA-RNTI), which indicates the terminal device to receive a response message for the terminal device in the Msg2. The terminal device may determine, based on the RA-RNTI and an index of a preamble sequence in the Msg2, whether the terminal device successfully receives the response message related to the terminal device. If the terminal device receives the response message related to the terminal device, the terminal device continues to perform subsequent processing.

In S240, the terminal device sends a message 3 (message3, Msg3 for short). Correspondingly, the network device receives the Msg3.

In non-contention-based random access, a preamble sequence is dedicated to a specific terminal device, and therefore, no conflict exists. Therefore, S240 and S250 of the random access process are performed only for contention-based random access.

Content of the Msg3 varies based on a triggering event of random access.

1. If the terminal device is in an initial access (initial access) state, the Msg3 is an RRC connection request (RRC connection request) transmitted on a common control channel (common control channel, CCCH). The Msg3 includes at least non-access stratum (non-access stratum, NAS) UE identification information.

2. If the terminal device is in an RRC connection re-establishment (RRC connection re-establishment) state, the Msg3 is an RRC connection re-establishment request (RRC connection re-establishment request) transmitted on a CCCH. The Msg3 does not include any NAS message.

3. If the terminal device is in a handover (handover) state, the Msg3 is RRC handover confirm (RRC handover confirm) that is subject to encryption and integrity protection and that is transmitted on a dedicated control channel (dedicated control channel, DCCH). The Msg3 includes a C-RNTI of the terminal device, and needs to carry a buffer status report (buffer status report, BSR) if possible.

4. For another triggering event, the Msg3 includes at least a C-RNTI.

In the foregoing cases, no matter what specific content is included in the Msg3, the Msg3 includes at least an identifier uniquely identifying the terminal device, and the identifier is used for subsequent conflict resolution. Specifically, for a terminal device in an RRC connected (RRC_CONNECTED) state, a unique identifier of the terminal device is a C-RNTI.

For a terminal device in a non-RRC_CONNECTED state, the terminal device uses a unique identifier (a serving temporary mobile subscriber identity (serving temporary mobile subscriber identity, S-TMSI) or a random number) from a core network as a flag of the terminal device. In this case, the network device needs to communicate with the core network before responding to the Msg3.

If the terminal device is in the RRC_CONNECTED state but an uplink is out of synchronization, the terminal device also has a C-RNTI of the terminal device.

In addition, uplink transmission usually uses terminal device-specific information, such as the C-RNTI, to scramble data on a UL-SCH. However, a conflict has not been resolved at this time, and scrambling cannot be based on the C-RNTI, and only a TC-RNTI can be used. That is, the Msg3 uses only the TC-RNTI for scrambling.

In S250, the terminal device sends a message 4 (message4, Msg4 for short). Correspondingly, the network device receives the Msg4.

As described in S240, the terminal device may carry a unique identifier, that is, the C-RNTI or a UE flag (the S-TMSI or the random number) from the core network, of the terminal device in the Msg3. In a conflict resolution mechanism, the network device carries the unique identifier in the Msg4 to specify a winning terminal device. However, another terminal device that does not win conflict resolution initiates the random access again.

If the terminal device is in the RRC_CONNECTED state, the terminal device has the unique identifier C-RNTI in a cell. In S250, if the terminal device wins the conflict resolution, the network device scrambles a physical downlink control channel (physical downlink control channel, PDCCH) by using the C-RNTI. After receiving the PDCCH scrambled using the C-RNTI, the terminal device knows that access of the terminal device is successful.

If the terminal device is not originally in the RRC_CONNECTED state, the terminal device does not have the C-RNTI in the cell, and a unique flag (an S-TMSI or a random number) of the terminal device is from the core network. In S250, if the terminal device wins the conflict resolution, the network device sends the Msg3 back to the terminal device through a UE contention resolution identity media access control (media access control, MAC) control element (UE contention resolution identity MAC control element). The terminal device compares the Msg3 with the Msg4 and finds that the Msg3 matches the Msg4. Then, the terminal device knows that access of the terminal device is successful.

In S260, the terminal device sends feedback information, where the feedback information indicates that the terminal device successfully receives the Msg4.

It should be understood that only the terminal device that wins the conflict resolution in S250 sends the feedback information. In other words, the terminal device sends the feedback information after receiving the unique identifier of the terminal device in the Msg4.

For example, the feedback information may be a correct acknowledgment (acknowledge, ACK).

In this scenario, if the terminal device is in an enhanced coverage scenario, the terminal device may repeatedly transmit a PUCCH, and the PUCCH carries the feedback information for the Msg4.

### 2. RRC signaling configuration

For descriptions of each procedure in this scenario, refer to the RRC signaling configuration process described in the foregoing descriptions of the dedicated PUCCH. Details are not described herein.

In this scenario, if a terminal device is in an enhanced coverage scenario, the terminal device may repeatedly transmit a PUCCH. The PUCCH may carry feedback information, and the feedback information indicates whether the terminal device successfully receives content sent by a network device. The content may be any possible content sent by the network device to the terminal device before RRC signaling configuration is completed.

In some embodiments, the content is RRC signaling, and the feedback information carried on the PUCCH may be feedback information sent by a physical layer of the terminal device, and the feedback information indicates whether the terminal device successfully receives the RRC signaling.

In an example, if the terminal device successfully receives the RRC signaling, the feedback information may be an ACK.

In another example, if the terminal device does not successfully receive the RRC signaling, the feedback information may be a negative acknowledgment (negative acknowledgment, NACK).

### 3. Channel measurement

Before RRC signaling configuration is completed, a network device may perform downlink scheduling based on a channel condition, to select a downlink transmission configuration and a related parameter.

The network device sends a channel measurement request to a terminal device, to indicate the terminal device to perform channel measurement.

For example, the channel measurement request may include a parameter used for the channel measurement. For example, the parameter may include a parameter such as a measurement periodicity and a measurement time period in the periodicity.

The terminal device measures channel states of different transmit beams based on the channel measurement request, to obtain channel state information (channel state information, CSI) including the different transmit beams.

In some embodiments, the terminal device sends a CSI measurement result to the network device, where the CSI measurement result includes CSI of different transmit beams, so that the network device determines a transmit beam corresponding to CSI with good channel quality.

In some other embodiments, the terminal device determines, based on the CSI of the different transmit beams, the transmit beam corresponding to the CSI with good channel quality, and sends the transmit beam to the network device.

In this scenario, if the terminal device is in an enhanced coverage scenario, the terminal device may repeatedly transmit a PUCCH, where the PUCCH carries feedback information, and the feedback information includes the CSI measurement result or the transmit beam.

### 4. Resource indication

Before RRC signaling configuration is completed, a network device may indicate, based on information, some transmission resources occupied by a PUCCH, and a terminal device transmits the PUCCH based on the indicated transmission resources. For example, the transmission resource includes a time-frequency resource.

In an uplink scheduling request (scheduling request, SR) process, if the terminal device needs to transmit uplink data, the terminal device needs to send, to the network device, a PUCCH carrying an SR, to notify the network device that the terminal device needs to transmit the uplink data. The network device allocates a transmission resource to the terminal device based on the SR.

Before the terminal device sends the PUCCH carrying the SR, the network device may send indication information to the terminal device, where the indication information indicates a transmission resource occupied by the PUCCH carrying the SR, and the terminal device sends, based on the indication information and on the transmission resource indicated by the indication information, the PUCCH carrying the SR.

In this scenario, if the terminal device is in an enhanced coverage scenario, the terminal device may repeatedly transmit the PUCCH carrying the SR, and the transmission resource occupied by the PUCCH is determined based on the indication information.

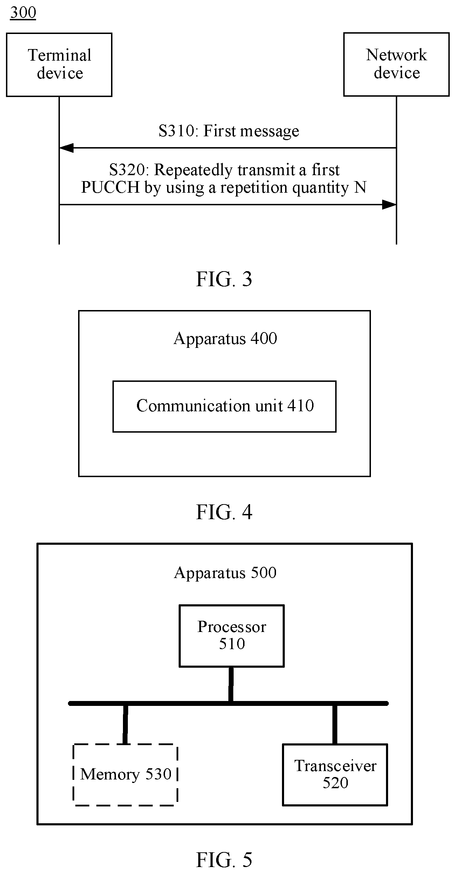

The following describes in detail a physical uplink control channel transmission method 300 in an embodiment of this application with reference to FIG. 3.

FIG. 3 is a schematic flowchart of a physical uplink control channel transmission method 300 according to an embodiment of this application.

In S310, a network device sends a first message. Correspondingly, a terminal device receives the first message.

In S320, when the terminal device is not configured with a dedicated PUCCH, a first PUCCH is repeatedly transmitted by using a repetition quantity N, where the dedicated PUCCH is a PUCCH configured for the terminal device based on higher layer signaling, and N is an integer greater than 1. The first PUCCH carries feedback information, and the feedback information indicates whether the terminal device successfully receives the first message, or the feedback information is channel quality-related information determined based on the first message; or the first PUCCH is determined based on the first message.

As described above, the first message and the first PUCCH are respectively a message and a PUCCH that are involved in a scenario in which the network device does not configure the dedicated PUCCH for the terminal device. For specific descriptions of the dedicated PUCCH, refer to the foregoing related descriptions. Details are not described.

The following describes the first message and the first PUCCH in various possible scenarios.

In some embodiments, the first message and the first PUCCH are respectively a message and a PUCCH in a random access process. For example, the first message is a message 4 (Msg4) in the random access process, and the first PUCCH carries feedback information for the Msg4, that is, the feedback information indicates whether the terminal device successfully receives the Msg4. For specific descriptions of the message 4 (Msg4) and the feedback information in the random access process, refer to the foregoing related descriptions. Details are not described.

In some other embodiments, the first message and the first PUCCH are respectively a message and a PUCCH in an RRC signaling configuration process. For example, the first message is RRC signaling, and the first PUCCH carries feedback information for the RRC signaling. The feedback information may be feedback information sent by a physical layer of the terminal device, and the feedback information indicates whether the terminal device successfully receives the RRC signaling, or in other words, the feedback information indicates whether the terminal device successfully receives a physical downlink shared channel (physical downlink shared channel, PDSCH) carrying the RRC signaling. For specific descriptions of the RRC signaling and the feedback information in the RRC signaling configuration process, refer to the foregoing related descriptions. Details are not described.

In some other embodiments, the first message and the first PUCCH are respectively a message and a PUCCH in a channel measurement process. For example, the first message may be a channel measurement request, the first PUCCH carries feedback information that is related to channel quality and that is determined based on the channel measurement request, and the feedback information may include a CSI measurement result or a transmit beam. For specific descriptions of the channel measurement request and the feedback information in the channel measurement process, refer to the foregoing related descriptions. Details are not described.

In some other embodiments, the first message may be indication information indicating a transmission resource occupied by a PUCCH carrying an SR. The first PUCCH is determined based on the indication information. That is, a transmission resource occupied by the first PUCCH is obtained based on the indication information. For specific descriptions of the indication information and the first PUCCH, refer to descriptions of the indication information and the first PUCCH in the foregoing resource indication process. Details are not described.

It should be noted that the repetition quantity N of the first PUCCH has three possible explanations. The repetition quantity N is a repetition quantity for initial transmission of the first PUCCH; or the repetition quantity N is a repetition quantity for retransmission of the first PUCCH; or the repetition quantity N is a sum of a repetition quantity for initial transmission of the first PUCCH and a repetition quantity for retransmission of the first PUCCH. For example, it is assumed that the repetition quantity for initial transmission of the first PUCCH is 2, and the repetition quantity for retransmission of the first PUCCH is 3. In this case, the repetition quantity N may be 2, 3, or 5.

According to the physical uplink control channel transmission method provided in this embodiment of this application, when the network device does not configure the dedicated PUCCH for the terminal device, the terminal device may repeatedly transmit, by using the repetition quantity N, the first PUCCH related to the first message. In this way, a success rate of transmission of the first PUCCH can be improved, to improve communication transmission efficiency, and a problem of low communication transmission efficiency in a coverage enhancement scenario can be effectively resolved.

In this embodiment of this application, the repetition quantity N for repeated transmission of the PUCCH may be determined in two manners (namely, Manner 1 and Manner 2). The following describes in detail the two manners.

**Manner 1**

In Manner 1, the network device may send indication information used for determining the repetition quantity N. In other words, the network device sends first indication information, where the first indication information is used for determining the repetition quantity N. Correspondingly, the terminal device receives the first indication information, and determines the repetition quantity N based on the first indication information.

In some embodiments, the first indication information indicates the repetition quantity N.

In an example, the first indication information may include the repetition quantity N. The terminal device may directly determine the repetition quantity N.

In another example, the first indication information may include an index indicating the repetition quantity N. For example, the index may be an index in various cases in the following Manner 1-1 and Manner 1-2. The terminal device determines the repetition quantity N based on the index.

In some other embodiments, the first indication information may indicate content related to the repetition quantity N. The content is related to the repetition quantity N. For example, the content may be a value in the following Manner 1-3 or a total quantity of symbols occupied for repeated transmission of the PUCCH in the following Manner 1-4. The terminal device may determine the repetition quantity N based on the content.

In some embodiments, the first indication information may be carried in DCI. For example, the first indication information may be carried in a field in the DCI, and the field may be a new field, or an existing field (for example, an MCS field, whose reference can be made to descriptions of an MCS field in the following Manner 1-1) may be reused.

In some other embodiments, the first indication information is carried in a system message. For example, the system message may be a system information block (system information block, SIB).

In some embodiments, the first message includes the first indication information. For example, when the first indication information is carried in the DCI and the first message includes the first indication information, the first message may include the DCI that carries the first indication information. For example, when the first message is a message 4 (Msg4) in a random access process, the Msg4 includes the DCI, and the DCI includes the first indication information.

The following specifically describes the first indication information in a specific manner in Manner 1.

**Manner 1-1**

In this manner, the repetition quantity N is related to a modulation and coding scheme (modulation and coding scheme, MCS).

In some embodiments, the first message includes first indication information, the first indication information includes a first index, the first index indicates the repetition quantity N, the first index further indicates a first MCS, and the first MCS is used for demodulating at least a part of content of the first message. That is, the first index may indicate both the repetition quantity N and the first MCS.

In an embodiment in which the first message is the Msg4, the first indication information may be carried in the DCI in the Msg4, the first PUCCH carries feedback information for the Msg4, and the first MCS is used for demodulating a data part in the Msg4.

During implementation, the network device may configure a plurality of MCSs and a plurality of repetition quantities based on the system message, where the plurality of MCSs correspond to the plurality of repetition quantities, one MCS corresponds to one repetition quantity, and one index indicates both an MCS and a corresponding repetition quantity. Subsequently, the network device determines that the terminal device may use the first index to indicate the first MCS and the corresponding repetition quantity N, and may send the first index based on the first indication information. The terminal device determines the first MCS and the repetition quantity N of the first PUCCH based on the first index and a relationship between the MCS, the repetition quantity and the index in the received system message.

It should be understood that the repetition quantity N is any one of the plurality of repetition quantities configured by the network device, and the first MCS is any one of the plurality of MCSs configured by the network device.

For example, the relationship between the MCS, the repetition quantity of the PUCCH, and the index may be represented using an MCS table.

Table 1 is an example of the MCS table according to embodiments of this application. Refer to Table 1. A first column in Table 1 represents an MCS index, a second column represents a modulation order, a third column represents a code rate, and a fourth column represents a repetition quantity of a PUCCH, where one modulation order and one code rate represent one MCS. It can be learned that one MCS index not only indicates a modulation order and a code rate that are of one MCS, but also indicates a repetition quantity N of a PUCCH. For example, 2 in the first column in Table 1 indicates that an index is 2, a corresponding modulation order is 2, a code rate is 193, and a repetition quantity of a PUCCH is 2. The first index of the first indication information may be any MCS index in Table 1.

It should be understood that, in comparison with an existing MCS table, content indicating the repetition quantity of the PUCCH is added in the MCS table in Table 1, and an existing MCS index is reused, so that the MCS index indicates both the MCS and the repetition quantity of the PUCCH.

**Table 1**

| MCS index (MCS index) | Modulation order (modulation order) | Target code rate (target code rate) | Repetition quantity of the PUCCH (PUCCH repetition) |
|---|---|---|---|
| 0 | 2 | 120 | **2** |
| 1 | 2 | 157 | **2** |
| 2 | 2 | 193 | **2** |
| 3 | 2 | 251 | **2** |
| 4 | 2 | 308 | **2** |
| 5 | 2 | 379 | **2** |
| 6 | 2 | 449 | **2** |
| 7 | 2 | 526 | **2** |
| 8 | 2 | 602 | **2** |
| 9 | 2 | 679 | **2** |
| 10 | 4 | 340 | **4** |
| 11 | 4 | 378 | **4** |
| 12 | 4 | 434 | **4** |
| 13 | 4 | 490 | **4** |
| 14 | 4 | 553 | **4** |
| 15 | 4 | 616 | **4** |
| 16 | 4 | 658 | **4** |
| 17 | 6 | 438 | **4** |
| 18 | 6 | 466 | **4** |
| 19 | 6 | 517 | **4** |
| 20 | 6 | 576 | **8** |
| 21 | 6 | 616 | **8** |
| 22 | 6 | 666 | **8** |
| 23 | 6 | 719 | **8** |
| 24 | 6 | 772 | **8** |
| 25 | 6 | 822 | **8** |
| 26 | 6 | 873 | **8** |
| 27 | 6 | 910 | **8** |
| 28 | 6 | 948 | **8** |
| 29 | 2 | reserved | |
| 30 | 4 | reserved | |
| 31 | 6 | reserved | |

According to the physical uplink control channel transmission method provided in this embodiment of this application, the MCS is associated with the repetition quantity of the PUCCH, and an index (for example, the first index) indicating the MCS is also used for indicating the repetition quantity of the PUCCH, that is, the index indicating the MCS is reused. This can not only completely implement an indication of an existing MCS, but also reduce an additional quantity of bits that are added because the repetition quantity N is separately indicated, so that signaling overheads are reduced.

If the terminal device needs to repeatedly transmit the PUCCH in a coverage enhancement scenario, an MCS with a high code rate and a high modulation order may not be needed in a transmission process. Therefore, a modulation order and a code rate of the MCS may be properly adjusted, and an MCS with a low modulation order and a low code rate may be used. In this way, some bits can be saved, and the saved bits indicate the repetition quantity of the PUCCH, to reduce an unnecessary waste of resources.

Table 2 is another example of the MCS table according to embodiments of this application. Refer to Table 2. All modulation orders in Table 2 are 2.

The code rate is also greatly reduced. Because the MCS with a low modulation order and a low code rate occupies a small quantity of bits, in comparison with the MCS with a high code rate and a high modulation order included in Table 1, a quantity of bits is reduced. For example, a maximum modulation order in Table 1 is 6, and needs to be represented using 3 bits. Each modulation order in Table 2 is 2, and needs to be represented using only 1 bit. Therefore, 2 bits are saved. The saved 2 bits may indicate the repetition quantity of the PUCCH.

**Table 2**

| MCS index (MCS index) | Modulation order (modulation order) | Target code rate (target code rate) | Repetition quantity of the PUCCH (PUCCH repetition) |
|---|---|---|---|
| 0 | 2 | 120 | **2** |
| 1 | 2 | 157 | **2** |
| 2 | 2 | 193 | **2** |
| 3 | 2 | 251 | **2** |
| 4 | 2 | 308 | **2** |
| 5 | 2 | 379 | **2** |
| 6 | 2 | 449 | **2** |
| 7 | 2 | 526 | **2** |
| 8 | 2 | 602 | **2** |
| 9 | 2 | 679 | **2** |
| 10 | 2 | 120 | **4** |
| 11 | 2 | 157 | **4** |
| 12 | 2 | 193 | **4** |
| 13 | 2 | 251 | **4** |
| 14 | 2 | 308 | **4** |
| 15 | 2 | 379 | **4** |
| 16 | 2 | 449 | **4** |
| 17 | 2 | 526 | **4** |
| 18 | 2 | 602 | **4** |
| 19 | 2 | 679 | **4** |
| 20 | 2 | 120 | **8** |
| 21 | 2 | 157 | **8** |
| 22 | 2 | 193 | **8** |
| 23 | 2 | 251 | **8** |
| 24 | 2 | 308 | **8** |
| 25 | 2 | 379 | **8** |
| 26 | 2 | 449 | **8** |
| 27 | 2 | 526 | **8** |
| 28 | 2 | 602 | **8** |

(continued)

| MCS index (MCS index) | Modulation order (modulation order) | Target code rate (target code rate) | **Repetition quantity of the PUCCH (PUCCH repetition)** |
|---|---|---|---|
| 29 | 2 | reserved | |
| 30 | 2 | reserved | |
| 31 | 2 | reserved | |

In some other embodiments, the first message includes first indication information, the first indication information includes a first index, the first index indicates the repetition quantity N, the first index further indicates a first MCS, and the first MCS is used for demodulating at least a part of content of the first message. The first index is an index in the MCS table, and a maximum quantity of bits occupied by the first index is less than 5. In other words, the first index may indicate both the repetition quantity N and the first MCS. For specific descriptions, refer to the foregoing related descriptions.

The first index is any MCS index in the MCS table, and when the maximum quantity of bits occupied by the first index is less than 5, it means that, in comparison with a case in which a quantity of bits occupied by an index in an MCS table in a conventional technology is at least equal to 5, in the MCS table in embodiments of this application, some MCSs indicated by indexes with larger values are reduced, and some MCSs indicated by indexes with smaller values are retained.

Actually, when the terminal device needs to repeatedly transmit the PUCCH in the coverage enhancement scenario, the MCS with a high code rate and a high modulation order may not be needed in the transmission process. Some MCSs with high bit rates and high modulation orders (which are represented by the indexes with larger values) may be deleted from the MCS table, and some MCSs with low bit rates and low modulation orders (which are represented by the indexes with smaller values) may be retained. In this way, additional resource overheads can be reduced.

Table 3 is another example of the MCS table according to embodiments of this application. Refer to Table 3. In comparison with Table 1, only indexes 0 to 15 in Table 1 are retained in Table 3, and a maximum quantity of occupied bits is 4, which is less than 5 bits occupied by each of indexes 0 to 31 in Table 1.

**Table 3**

| MCS index (MCS index) | Modulation order (modulation order) | Target code rate (target code rate) | **Repetition quantity of the PUCCH (PUCCH repetition)** |
|---|---|---|---|
| 0 | 2 | 120 | **2** |
| 1 | 2 | 157 | **2** |
| 2 | 2 | 193 | **2** |
| 3 | 2 | 251 | **2** |
| 4 | 2 | 308 | **2** |
| 5 | 2 | 379 | **2** |
| 6 | 2 | 449 | **2** |
| 7 | 2 | 526 | **2** |
| 8 | 2 | 602 | **2** |
| 9 | 2 | 679 | **2** |
| 10 | 4 | 340 | **4** |
| 11 | 4 | 378 | **4** |
| 12 | 4 | 434 | **4** |
| 13 | 4 | 490 | **4** |
| 14 | 4 | 553 | **4** |
| 15 | 4 | 616 | **4** |

According to the physical uplink control channel transmission method provided in this embodiment of this application, the first index is any MCS index in the MCS table, and when the maximum quantity of bits occupied by the first index is less than 5, it means that, in comparison with a case in which a quantity of bits occupied by an index in an MCS table in a conventional technology is at least equal to 5, in the MCS table in this embodiment of this application, some MCSs indicated by indexes with larger values are deleted, and some MCSs indicated by indexes with smaller values are retained. First, a quantity of occupied bits can be reduced by deleting MCSs in an MCS table, so that a waste of resources can be reduced. Second, because a high-performance MCS may not be needed in the coverage enhancement scenario, the MCSs deleted from the MCS table basically have no impact on communication transmission in the coverage enhancement scenario, so that the communication transmission in the coverage enhancement scenario can be completely implemented.

For example, in a random access scenario, the first message is an Msg4, the Msg4 includes DCI, the DCI includes first indication information, and a first index in the first indication information indicates a first MCS and a repetition quantity N of a first PUCCH. The first MCS is used for demodulating a data part in the Msg4, the first PUCCH carries feedback information for the Msg4, and the feedback information indicates that the terminal device successfully receives the Msg4.

During implementation, the network device sends the Msg4 to the terminal device.

The terminal device receives the Msg4, demodulates the data part in the Msg4 based on the first MCS indicated by the first indication information of the DCI in the Msg4, and determines the repetition quantity N of the first PUCCH based on the first indication information.

The terminal device repeatedly transmits, by using the repetition quantity N, the first PUCCH carrying the feedback information for the Msg4.

For example, the network device may configure content in Table 1 to Table 3 based on a system message.

As described above, when the terminal device needs to repeatedly transmit the PUCCH in the coverage enhancement scenario, the MCS with a high code rate and a high modulation order may not be needed in the transmission process. Some MCSs with high bit rates and high modulation orders (which are represented by the indexes with larger values) may be deleted from the existing MCS table, and some MCSs with low bit rates and low modulation orders (which are represented by indexes with smaller values) may be retained. In this way, because some MCSs are deleted, some bits are saved, and a quantity of bits occupied by an index indicating an MCS is naturally reduced. In this case, a quantity of bits reserved in an MCS field indicating an MCS in existing DCI is greater than a quantity of bits occupied in an actual indication process. Therefore, to avoid an unnecessary waste of resources, a quantity of redundant bits in the MCS field may indicate a repetition quantity of a PUCCH.

Therefore, in some other embodiments, the first message includes first indication information, and the first indication information is carried in a first part of bits in an MCS field of DCI; and the MCS field further includes a second part of bits. The second part of bits carries MCS information indicating a first MCS, and the first MCS is used for demodulating at least a part of content of the first message. The first indication information includes a first index indicating the repetition quantity N, the MCS information includes a second index indicating the first MCS, the second index is an index in an MCS table, and a maximum quantity of bits occupied by the second index is less than 5.

In this embodiment, the MCS field in the DCI includes the first part of bits and the second part of bits. The first part of bits carries the first index indicating the repetition quantity N of the first PUCCH, and the second part of bits carries the second index indicating the first MCS. The second index is any index in the MCS table, and the maximum quantity of bits occupied by the second index is less than 5. It means that, in comparison with a case in which a quantity of bits occupied by an index in an MCS table in a conventional technology is at least equal to 5, in the MCS table in this embodiment, some MCSs indicated by indexes with larger values are deleted, and some MCSs indicated by indexes with smaller values are retained. In this way, a quantity of occupied bits can be reduced by deleting MCSs in an MCS table. On this basis, a repetition quantity of a PUCCH may be additionally indicated in an existing MCS field, and a waste of resources is further reduced by reusing the existing MCS field.

Table 4 is another example of the MCS table according to embodiments of this application. Refer to Table 4. The MCS table does not include content of a repetition quantity of a PUCCH, and the MCS table includes only MCSs respectively indicated by indexes 0 to 7. In comparison with existing MCSs respectively indicated by indexes 0 to 31, content of 24 MCSs is reduced. This reduces a quantity of bits.

In addition, because indexes in the existing MCS table are 0 to 31, the MCS field in the existing DCI includes at least 5 bits. 5 bits are used as an example. In this embodiment, the second part of bits carrying and indicating the first MCS in the MCS field may occupy 3 bits, and the remaining 2 bits are used as the first part of bits, which carries an index indicating the repetition quantity N.

**Table 4**

| MCS index (MCS index) | Modulation order (modulation order) | Target code rate (target code rate) |
|---|---|---|
| 0 | 2 | 120 |
| 1 | 2 | 157 |

(continued)

| MCS index (MCS index) | Modulation order (modulation order) | Target code rate (target code rate) |
|---|---|---|
| 2 | 2 | 193 |
| 3 | 2 | 251 |
| 4 | 2 | 308 |
| 5 | 2 | 379 |
| 6 | 2 | 449 |
| 7 | 2 | 526 |

It should be understood that, in this embodiment, the network device may configure a plurality of repetition quantities of a PUCCH in any possible manner, and one index indicates one repetition quantity. For example, the network device may configure a correspondence between a repetition quantity of a PUCCH and an index, and send the correspondence to the terminal device. Subsequently, the terminal device may determine, based on a first index in an MCS field and the correspondence, a repetition quantity N indicated by the first index.

It should be further understood that the correspondence between the repetition quantity of the PUCCH and the index may be represented using a table. This is not limited in embodiments of this application.

It should be noted that, in DCI, a field adjacent to the MCS field may be a new data indication field, the first part of bits and the second part of bits may be separately understood as two subfields, and any subfield may be adjacent to the new data indication field.

For example, in a random access scenario, the first message is an Msg4, the Msg4 includes DCI, the DCI includes an MCS field, and the MCS field includes a first part of bits and a second part of bits. The first part of bits carries first indication information, and the first indication information includes a first index indicating a repetition quantity N of a first PUCCH. The second part of bits carries MCS information, and the MCS information includes a second index indicating the first MCS. The first MCS is used for demodulating a data part in the Msg4, the first PUCCH carries feedback information for the Msg4, and the feedback information indicates that the terminal device successfully receives the Msg4.

During implementation, the network device sends the Msg4 to the terminal device.

The terminal device receives the Msg4, demodulates a data part in the Msg4 based on a first MCS indicated by MCS information in the DCI, and determines the repetition quantity N of the first PUCCH based on the first indication information in the DCI.

The terminal device repeatedly transmits, by using the repetition quantity N, the first PUCCH carrying the feedback information for the Msg4.

For example, the network device may configure content in Table 4 based on a system message.

**Manner 1-2**

In this manner, first indication information indicates the repetition quantity N, and the first indication information is carried in DCI.

In some embodiments, the first indication information not only indicates the repetition quantity N, but may also indicate another parameter of the first PUCCH.

For example, the another parameter of the first PUCCH includes at least one of the following parameters: a PUCCH format (PUCCH format), a first symbol (first symbol) occupied by the PUCCH (a first symbol for short), a quantity of symbols (number of symbols) occupied by the PUCCH (a quantity of symbols for short), a physical resource block (physical resource block, PRB) offset (PRB offset), and a set of cyclic shift indexes (set of initial CS indexes). A time-frequency resource occupied by the PUCCH may be determined based on the first symbol, the quantity of symbols, and the PRB offset. In addition, the quantity of symbols herein represents a quantity of symbols occupied for single transmission of the PUCCH.

In this embodiment, an existing PUCCH resource may be associated with the repetition quantity of the PUCCH according to embodiments of this application, to define a new PUCCH resource. The new PUCCH resource includes the existing PUCCH resource and the repetition quantity of the PUCCH according to embodiments of this application. Subsequently, when the repetition quantity N of the first PUCCH is indicated based on the first indication information, the another parameter of the first PUCCH may also be indicated. The another parameter of the first PUCCH is a parameter in the existing PUCCH resource.

For the existing PUCCH resource, it should be noted that, before the network device configures a dedicated PUCCH for the terminal device, to implement transmission of a PUCCH, in a conventional technology, the network device may configure a group of PUCCH resources (existing PUCCH resources) applicable to a specific cell, and the terminal device performs uplink transmission based on these PUCCH resources. These PUCCH resources are sent to the terminal device based on a system message. It should be understood that, in the conventional technology, the PUCCH is transmitted once by default.

For ease of description, the foregoing described existing PUCCH resources may be collectively referred to as old PUCCH resources, PUCCH resources different from the old PUCCH resources in embodiments of this application may be collectively referred to as new PUCCH resources, and a resource that includes the old PUCCH resource and the repetition quantity of the PUCCH in this embodiment may be denoted as a first new PUCCH resource. It should be understood that the new PUCCH resource may be a PUCCH resource separately configured by the network device for the terminal device in a coverage enhancement scenario.

In addition, in comparison with the dedicated PUCCH, the old PUCCH resource and the new PUCCH resource in embodiments of this application may also be understood as common PUCCH resources (pucch-resource common), which are PUCCH resources applicable to a terminal device in a specific cell. For further differentiation, the old PUCCH resources may be collectively referred to as common PUCCH resources 1 (pucch-resource common1), the new PUCCH resources may be collectively referred to as common PUCCH resources 2 (pucch-resource common2), and the first new PUCCH resource is denoted as an example of the common PUCCH resource 2 (pucch-resource common2).

During implementation, the network device may configure the first new PUCCH resource (pucch-resource common2) based on a system message, and indicate a PUCCH in the first new PUCCH resource by using an index, that is, the index indicates various parameters of the PUCCH in the first new PUCCH resource. For example, the index may indicate a PUCCH format, a first symbol, a quantity of symbols, a PRB offset, a set of cyclic shift indexes, and a repetition quantity of the PUCCH.

Subsequently, the network device sends an index (denoted as a third index) based on the first indication information, and the terminal device determines, based on the third index and a relationship between the first new PUCCH resource and the index in the received system message, the repetition quantity N and another parameter that are of the first PUCCH.

In other words, in this manner, the first indication information includes the third index, and the third index indicates the repetition quantity N, and further indicates the another parameter of the first PUCCH.

For example, the relationship between the first new PUCCH resource and the index may be represented using a table.

Table 5 shows the first new PUCCH resource (an example of pucch-resource common2) according to embodiments of this application. It is emphasized again that, in Table 5, a first column indicates an index, a second column indicates a PUCCH format, a third column indicates a first symbol, a fourth column indicates a quantity of symbols, where the quantity of symbols indicates a quantity of symbols occupied for single transmission of a PUCCH, a fifth column indicates a PRB offset, a sixth column indicates a set of cyclic shift indexes, and a seventh column indicates a repetition quantity of the PUCCH. For example, an index is 2, a corresponding PUCCH format is format 0, a first symbol is 12, a quantity of symbols is 2, a PRB offset is 3, a set of cyclic shift indexes is {0, 4, 8}, and a repetition quantity of a PUCCH is 4.

**Table 5**

| Index (index) | PUCCH format (PUCCH format) | First symbol (first symbol) | A quantity of symbols (number of symbols) | PRB offset (PRB offset) | Set of cyclic shift indexes (set of initial CS indexes) | **Repetition quantity of the PUCCH (PUCCH repetition)** |
|---|---|---|---|---|---|---|
| 0 | 0 | 12 | 2 | 0 | {0,3} | **4** |
| 1 | 0 | 12 | 2 | 0 | {0,4,8} | **4** |
| 2 | 0 | 12 | 2 | 3 | {0,4,8} | **4** |
| 3 | 1 | 10 | 4 | 0 | {0,6} | **2** |
| 4 | 1 | 10 | 4 | 0 | {0,3,6,9} | **2** |
| 5 | 1 | 10 | 4 | 2 | {0,3,6,9} | **2** |
| 6 | 1 | 10 | 4 | 4 | {0,3,6,9} | **2** |
| 7 | 1 | 4 | 10 | 0 | {0,6} | **4** |
| 8 | 1 | 4 | 10 | 0 | {0,3,6,9} | **2** |
| 9 | 1 | 4 | 10 | 2 | {0,3,6,9} | **2** |

(continued)

| Index (index) | PUCCH format (PUCCH format) | First symbol (first symbol) | A quantity of symbols (number of symbols) | PRB offset (PRB offset) | Set of cyclic shift indexes (set of initial CS indexes) | **Repetition quantity of the PUCCH (PUCCH repetition)** |
|---|---|---|---|---|---|---|
| 10 | 1 | 4 | 10 | 4 | {0,3,6,9} | **2** |
| 11 | 1 | 0 | 14 | 0 | {0,6} | **2** |
| 12 | 1 | 0 | 14 | 0 | {0,3,6,9} | **4** |
| 13 | 1 | 0 | 14 | 2 | {0,3,6,9} | **4** |
| 14 | 1 | 0 | 14 | 4 | {0,3,6,9} | **4** |
| 15 | 1 | 0 | 14 | $\left\lfloor N_{BWP}^{size} / 4 \right\rfloor$ | {0,3,6,9} | **4** |

For example, in a random access scenario, the first message is an Msg4, the Msg4 includes DCI, the DCI includes first indication information, and the first indication information includes a third index indicating a repetition quantity N and another parameter that are of the first PUCCH. The first PUCCH carries feedback information for the Msg4, and the feedback information indicates that the terminal device successfully receives the Msg4.

During implementation, the network device sends the Msg4 to the terminal device.

The terminal device receives the Msg4, and determines, based on the first indication information of the DCI, the another parameter and the repetition quantity N that are of the first PUCCH.

The terminal device repeatedly transmits, by using the repetition quantity N and the another parameter, the first PUCCH carrying the feedback information for the Msg4.

For example, the network device may configure content in Table 5 based on a system message.

**Manner 1-3**

In this manner, a repetition quantity of a PUCCH is related to a total quantity of symbols occupied for repeated transmission of the PUCCH. In this way, the terminal device can determine the repetition quantity of the PUCCH based on the total quantity of symbols.

In some embodiments, the first message includes first indication information, the first indication information indicates a total quantity of symbols occupied for repeated transmission of the first PUCCH, and the repetition quantity N is related to the total quantity of symbols and a quantity of symbols occupied for single transmission of the first PUCCH.

In this way, the terminal device can determine the total quantity of symbols based on the first indication information, and determine the repetition quantity N based on a relationship between the total quantity of symbols, the quantity of symbols occupied for the single transmission of the first PUCCH, and the repetition quantity N.

For example, the relationship between the total quantity of symbols, the quantity of symbols occupied for the single transmission of the first PUCCH, and the repetition quantity N may be predefined by a system or a protocol.

In an example, a quotient value of the total quantity of symbols and the quantity of symbols occupied for the single transmission of the first PUCCH is the repetition quantity N. For example, it is assumed that the total quantity of symbols is 8, and the quantity of symbols occupied for the single transmission of the first PUCCH is 2. In this case, the repetition quantity N=8/2=4.

For example, the quantity of symbols occupied for the single transmission of the first PUCCH may be predefined by a system or a protocol, or may be indicated by the network device based on signaling. This is not limited in embodiments of this application.

For example, the first indication information may include an index (denoted as a fourth index), and the fourth index indicates a total quantity of symbols occupied by the first PUCCH.

During implementation, the network device may configure a PUCCH resource based on a system message, and indicate a PUCCH in the PUCCH resource by using an index. Subsequently, the network device sends the fourth index based on the first indication information, and the terminal device determines the total quantity of symbols based on the fourth index and the PUCCH resource in the received system message, and determines the repetition quantity N based on the relationship between the total quantity of symbols, the quantity of symbols occupied for the single transmission of the first PUCCH, and the repetition quantity.

The PUCCH in the PUCCH resource may include at least one of the following parameters: a PUCCH format, a first symbol occupied by the PUCCH (a first symbol for short), and a total quantity of symbols occupied by the PUCCH (a quantity of symbols for short), a PRB offset, and a set of cyclic shift indexes.

In an example, a quantity of symbols occupied for single transmission of one PUCCH may be obtained based on a number of the first symbol.

For example, one slot includes 14 symbols, and the 14 symbols may be indicated using numbers ranging from 0 to 13 respectively. It is assumed that the number of the first symbol is 12, and the last symbol in one slot is an end symbol of the PUCCH by default. In this case, it may be determined that symbols occupied for the single transmission of one PUCCH are symbols whose numbers are 12 and 13 respectively, that is, the quantity of symbols occupied for the single transmission of one PUCCH is 2.

It should be understood that the PUCCH resource in this embodiment may be understood as a PUCCH resource obtained by modifying an existing PUCCH resource, to be specific, a quantity of symbols occupied for single transmission of a PUCCH in the existing PUCCH resource is modified to a total quantity of symbols, and other parameters may remain unchanged.

For ease of description, definitions of the old PUCCH resource and the new PUCCH resource in Manner 1-2 are still used. In this embodiment, a new PUCCH resource that includes the old PUCCH resource and the total symbol according to embodiments of this application may be denoted as a second new PUCCH resource. For further differentiation, the second new PUCCH resource is denoted as another example of the common PUCCH resource 2 (pucch-resource common2).

Table 6 is another example of the second new PUCCH resource (pucch-resource common2) according to embodiments of this application. Refer to Table 6. A quantity of symbols is a total quantity of symbols occupied for repeated transmission of one PUCCH, and other parameters may be the same as those of the old PUCCH resource. For example, the first PUCCH is a PUCCH whose index is 2. A corresponding total quantity of symbols is 8, and a first symbol is 12. It may be determined that a quantity of symbols occupied for single transmission of the first PUCCH is 2, and the repetition quantity N=8/2=4.

**Table 6**

| Index (index) | PUCCH format (PUCCH format) | First symbol (first symbol) | A quantity of symbols (number of symbols) | PRB offset (PRB offset) | Set of cyclic shift indexes (set of initial CS indexes) |
|---|---|---|---|---|---|
| 0 | 0 | 12 | **8** | 0 | {0,3} |
| 1 | 0 | 12 | **8** | 0 | {0,4,8} |
| 2 | 0 | 12 | **8** | 3 | {0,4,8} |
| 3 | 1 | 10 | **12** | 0 | {0,6} |
| 4 | 1 | 10 | **12** | 0 | {0,3,6,9} |
| 5 | 1 | 10 | **12** | 2 | {0,3,6,9} |
| 6 | 1 | 10 | **48** | 4 | {0,3,6,9} |
| 7 | 1 | 4 | **40** | 0 | {0,6} |
| 8 | 1 | 4 | **40** | 0 | {0,3,6,9} |
| 9 | 1 | 4 | **40** | 2 | {0,3,6,9} |
| 10 | 1 | 4 | **40** | 4 | {0,3,6,9} |
| 11 | 1 | 0 | **56** | 0 | {0,6} |
| 12 | 1 | 0 | **14** | 0 | {0,3,6,9} |
| 13 | 1 | 0 | **14** | 2 | {0,3,6,9} |
| 14 | 1 | 0 | **14** | 4 | {0,3,6,9} |
| 15 | 1 | 0 | **14** | $\left\lfloor N_{BWP}^{size} / 4 \right\rfloor$ | {0,3,6,9} |

For example, in a random access scenario, the first message is an Msg4, the Msg4 includes DCI, the DCI includes first indication information, and the first indication information includes a total quantity of symbols occupied for repeated transmission of the first PUCCH. The repetition quantity N of the first PUCCH is related to a total quantity of symbols and a quantity of symbols occupied for single transmission of the first PUCCH. The first PUCCH carries feedback information for the Msg4, and the feedback information indicates that the terminal device successfully receives the Msg4.

During implementation, the network device sends the Msg4 to the terminal device.

The terminal device receives the Msg4, determines the total quantity of symbols occupied for the repeated transmission of the first PUCCH based on the first indication information in the DCI, and determines the repetition quantity N based on the total quantity of symbols and a relationship between the repetition quantity N of the first PUCCH, the total quantity of symbols, and the quantity of symbols occupied for the single transmission of the first PUCCH;

The terminal device repeatedly transmits, by using the repetition quantity N, the first PUCCH carrying the feedback information for the Msg4.

For example, the network device may configure content in Table 6 based on a system message.

According to the physical uplink control channel transmission method provided in this embodiment of this application, the repetition quantity N of the first PUCCH is associated with the total quantity of symbols occupied for the repeated transmission of the first PUCCH, and the terminal device may obtain the repetition quantity N based on the total quantity of symbols indicated by the network device. In this manner, a quantity of symbols occupied for single transmission of a PUCCH in an existing standard PUCCH resource may be modified to a total quantity of symbols. This slightly changes the existing PUCCH resource, and is easy for implementation.

**Manner 1-4**

In this manner, a repetition quantity of a PUCCH is related to a value, and the terminal device may determine the repetition quantity of the PUCCH based on the value.

In some embodiments, the first message includes first indication information, the first indication information indicates a first value, and the first value is related to the repetition quantity N. To be specific, there is an association relationship between the first value and the repetition quantity N, and the terminal device may determine the repetition quantity N based on the first value and a relationship between the first value and the repetition quantity N.

For example, the first indication information may be carried in DCI.

For example, the relationship between the first value and the repetition quantity N may be predefined by a system or a protocol.

For example, the first value is smaller than the repetition quantity N. In this way, in comparison with a case in which the first indication information includes N, a quantity of bits can be effectively reduced, to reduce signaling overheads.

In an example, the first value and the repetition quantity N meet a relationship: $N=2^x$, where x is the first value. For example, if x=3, $N=2^3=8$.

In another example, the first value and the repetition quantity N meet a relationship: $N=2+x$, where x is the first value. For example, if x=3, N=2+3=5.

It should be understood that the relationship between the first value and the repetition quantity N in the foregoing example is merely an example for descriptions, and shall not constitute a limitation on embodiments of this application. Any other relationship that can indicate the first value and the repetition quantity N is applicable to embodiments of this application, and falls within the protection scope of embodiments of this application.

For example, in a random access scenario, the first message is an Msg4, the Msg4 includes DCI, the DCI includes first indication information, the first indication information indicates a first value, and the first value is related to the repetition quantity N of the first PUCCH. The first PUCCH carries feedback information for the Msg4, and the feedback information indicates that the terminal device successfully receives the Msg4.

During implementation, the network device sends the Msg4 to the terminal device.

The terminal device receives the Msg4, and determines the repetition quantity N of the first PUCCH based on a first value indicated by the first indication information of the DCI and a relationship between the first value and the repetition quantity N of the first PUCCH.

The terminal device repeatedly transmits, by using the repetition quantity N, the first PUCCH carrying the feedback information for the Msg4.

According to the physical uplink control channel transmission method provided in this embodiment of this application, the first value is associated with the repetition quantity N of the first PUCCH, and the terminal device may obtain the repetition quantity N based on the first value in the first indication information. In comparison with a case in which the first indication information includes N, to some extent, a quantity of bits can be effectively reduced, to reduce signaling overheads.

**Manner 1-5**

In this manner, a repetition quantity of a PUCCH may be indicated based on a system message.

To be specific, in some embodiments, the first indication information indicates the repetition quantity N, and the first indication information is carried in the system message. Alternatively, before the network device sends the first message, the method further includes: The network device sends a system message, where the system message includes first indication information indicating the repetition quantity N.

Correspondingly, the terminal device receives the system message, and determines the repetition quantity N based on the system message. For example, in an embodiment in which the network device sends the first indication information based on the system message, the network device may configure a fixed repetition quantity for the terminal device. When the terminal device needs to repeatedly transmit a PUCCH, regardless of a type of information carried in the PUCCH, the fixed repetition quantity of the PUCCH is used.

In an example, a manner in which the system message indicates the repetition quantity N based on the first indication information may be combined with the foregoing Manner 1-2. That is, the repetition quantity of the PUCCH is related to an existing PUCCH resource, and the repetition quantity and another parameter of the PUCCH are indicated based on an index. For example, a value of the repetition quantity of the PUCCH in Table 5 may be set to a fixed value. In this way, the first indication information includes an index (denoted as a fifth index), and the fifth index indicates the repetition quantity N and the another parameter of the PUCCH.

For example, in a random access scenario, the system message includes first indication information, the first indication information indicates the repetition quantity N of the first PUCCH, and the first message is an Msg4. The first PUCCH carries feedback information for the Msg4, and the feedback information indicates that the terminal device successfully receives the Msg4.

During implementation, the network device sends the system message to the terminal device.

The terminal device determines the repetition quantity N of the first PUCCH based on the first indication information in the system message.

The terminal device sends an Msg1 to the network device, the network device sends an Msg2 to the terminal device, the terminal device sends an Msg3 to the network device, and the network device sends an Msg4 to the terminal device.

The terminal device repeatedly transmits, by using the repetition quantity N, the first PUCCH carrying the feedback information for the Msg4.

In each of the foregoing Manner 1, the network device enables the terminal device to determine the repetition quantity N based on the first indication information. Actually, when the terminal device does not need coverage enhancement, the terminal device only needs to transmit a PUCCH once in an existing manner, and the network device does not need to indicate a repetition quantity. In this way, unnecessary signaling overheads can be effectively reduced.

Therefore, to reduce signaling overheads, in some embodiments, the method further includes:

The terminal device sends capability information, where the capability information indicates that the terminal device supports or is in a coverage enhancement scenario.

After receiving the capability information, the network device may determine whether content related to the repetition quantity N needs to be sent to the terminal device.

In an example, the capability information indicates that the terminal device supports the coverage enhancement scenario.

In one case, as long as the network device receives the capability information, the network device considers that the terminal device needs the coverage enhancement, and subsequently sends information related to the repetition quantity N.

In another case, after receiving the capability information, the network device may further determine, based on signal strength of an uplink signal, whether the terminal device needs the coverage enhancement. For example, even if the terminal device supports the coverage enhancement scenario and the signal strength of the uplink signal is not poor, the network device considers that the terminal device does not need the coverage enhancement temporarily, and does not send the first indication information related to the repetition quantity N. For another example, the terminal device supports the coverage enhancement scenario, and the signal strength of the uplink signal is also poor. In this case, the network device considers that the terminal device needs the coverage enhancement, and subsequently sends the first indication information related to the repetition quantity N.

In another example, the capability information indicates that the terminal device is in the coverage enhancement scenario.

In this example, after receiving the capability information, the network device sends the first indication information related to the repetition quantity N.

For example, the terminal device may determine, based on factors such as channel quality, interference, noise, and a cell location, whether the terminal device is in the coverage enhancement scenario, and send the capability information when the terminal device is in the coverage enhancement scenario. For example, if the terminal device is at a cell edge, there is a high probability that the terminal device is in the coverage enhancement scenario.

For example, the terminal device may determine, based on strength of a received signal, whether the terminal device is in the enhanced coverage scenario. For example, if strength of a signal received by the terminal device is lower than a threshold, the terminal device may determine that the terminal device is in the coverage enhancement scenario.

In a random access process, the capability information may include at least one of the following content. The network device determines, based on the content in the capability information, whether to send the first indication information related to the repetition quantity N.

1. A preamble sequence that is in a message 1 in the random access process and that corresponds to a coverage enhancement scenario. That is, the preamble sequence corresponds to the coverage enhancement scenario.

It should be understood that the preamble sequence in the random access process may also be referred to as a random access preamble sequence, and the two descriptions may be used interchangeably.

During implementation, each cell has a plurality of (for example, 64) preamble sequences for selection by the terminal device. A part of the plurality of preamble sequences corresponds to the enhanced coverage scenario, and another part of the plurality of preamble sequences is irrelevant to the coverage enhancement scenario. If the terminal device determines that the terminal device supports or is in the coverage enhancement scenario, the terminal device selects a preamble sequence in the part of preamble sequences corresponding to the coverage enhancement scenario, and sends the preamble sequence to the network device.

2. A format of a demodulation reference signal (demodulation reference signal, DMRS) that is in a message 3 in the random access process and that corresponds to coverage enhancement, or uplink control information that is in a message 3 and that corresponds to coverage enhancement.

In other words, the DMRS corresponds to the coverage enhancement scenario, or the uplink control information corresponds to the coverage enhancement scenario. For example, a format of the uplink control information may correspond to the coverage enhancement scenario.

For the DMRS, during implementation, a part of a plurality of DMRSs corresponds to the enhanced coverage scenario, and another part of the plurality of DMRSs is irrelevant to the coverage enhancement scenario. If the terminal device determines that the terminal device supports or is in the coverage enhancement scenario, the terminal device selects a DMRS in the part of DMRSs corresponding to the coverage enhancement scenario, and sends the DMRS to the network device.

Similarly, for the format of the uplink control information, during implementation, a part of a plurality of formats of the uplink control information corresponds to the enhanced coverage scenario, and another part of the plurality of formats is irrelevant to the coverage enhancement scenario. If the terminal device determines that the terminal device supports the coverage enhancement scenario or is in the coverage enhancement scenario, the terminal device selects a format in the part of formats corresponding to the coverage enhancement scenario as the format of the uplink control information, and sends the format of the uplink control information corresponding to the coverage enhancement scenario to the network device.

3. A repetition quantity M for repeated sending of a message 3 in the random access process, where M is a positive integer greater than 1.

**Manner 2**

In this manner, the network device does not need to indicate a repetition quantity N of a PUCCH to the terminal device based on the first indication information, and the terminal device may determine a repetition quantity N of the PUCCH.

In some embodiments, the first message is a message 4 (Msg4) in a random access process. The repetition quantity N is related to a repetition quantity M for repeated sending of a message 3 (Msg3) by the terminal device in the random access process, where M is a positive integer greater than 1.

In other words, there is a relationship between the repetition quantity N of the first PUCCH and the repetition quantity M of the message 3 (Msg3). The terminal device may determine the repetition quantity N of the to-be-sent first PUCCH based on the repetition quantity M of the message 3 (Msg3) sent by the terminal device.

In some embodiments, the relationship between the repetition quantity N and the repetition quantity M may be predefined by a system or a protocol.

In an example, the repetition quantity N is equal to the repetition quantity M.

In another example, the repetition quantity N is related to the repetition quantity M and a preset value. For example, the preset value may be predefined by a system or a protocol.

For example, the repetition quantity N, the repetition quantity M, and the preset value may meet any one of the following relationships, where n is the preset value. For example, n=2: $N=M/n$; $N=\lfloor M/n \rfloor$; $N=\lceil M/n \rceil$; or N=M-n.

It should be understood that the relationship between the repetition quantity N and the repetition quantity M in the foregoing example is merely an example for descriptions, and shall not constitute a limitation on embodiments of this application. Any other relationship that can indicate the repetition quantity N and the repetition quantity M is applicable to embodiments of this application, and falls within the protection scope of embodiments of this application.

For the repetition quantity M of the message 3 (Msg3), there is a possible explanation in embodiments of this application: The repetition quantity M is a repetition quantity for initial transmission of the message 3; the repetition quantity M is a repetition quantity for retransmission of the message 3; or the repetition quantity M is a sum of a repetition quantity for initial transmission of the message 3 and a repetition quantity for retransmission of the message 3.

In this manner, the terminal device may also send the capability information to the network device, so that the network device learns that there is a high probability that the terminal device repeatedly sends the first PUCCH, to identify the repeatedly sent first PUCCH.

Embodiments of this application involve repeated transmission of a PUCCH. To reduce a conflict between a resource occupied by the PUCCH in a scenario of the repeated transmission of the PUCCH and an existing resource occupied by the PUCCH in a scenario of one transmission of the PUCCH, the resource occupied for the repeated transmission of the PUCCH may be further divided.

In some embodiments, in N times of repeated transmission of the first PUCCH, a resource occupied for an $(N-1)^{th}$ time of transmission of the first PUCCH is offset by m1 frequency domain units relative to a resource occupied for first transmission. The $(N-1)^{th}$ time of transmission is transmission after the first transmission, and m1 is a positive integer greater than 0.

In this embodiment, the resource occupied for the first transmission of the first PUCCH may be an existing resource occupied for one transmission of the PUCCH, and the resource occupied for the $(N-1)^{th}$ time of transmission of the first PUCCH is redefined in embodiments of this application, and is offset by m1 frequency domain units relative to the resource occupied for the first transmission of the first PUCCH. For example, Table 5 is used as an example. A PRB offset in Table 5 may indicate an existing frequency domain unit occupied for one transmission of a PUCCH. If the first PUCCH is a PUCCH indicated by an index "2", the repetition quantity of the first PUCCH is 4, a PRB offset of the resource occupied for the first transmission of the first PUCCH is "3", and a resource occupied for the remaining three times of transmission of the first PUCCH is offset by m1 frequency domain units relative to a resource whose PRB offset is "3".

In some other embodiments, a resource occupied for an $N^{th}$ time of repeated transmission of the first PUCCH is offset by m2 frequency domain units relative to a reference frequency domain unit, where m2 is a positive integer greater than 0.

In an example, the reference frequency domain unit may be an existing frequency domain unit used during the one transmission of the first PUCCH, and the reference frequency domain unit is represented using a PRB offset. For example, Table 5 is still used as an example. If the first PUCCH is a PUCCH indicated by the index "2", and a PRB offset of the resource occupied for the one transmission of the first PUCCH is "3", in a case of the repeated transmission of the first PUCCH, if the repetition quantity N is 4, a resource occupied for four times of transmission of the first PUCCH is offset by m2 frequency domain units relative to a frequency domain unit whose PRB offset is "3".

In another example, the reference frequency domain unit may be a frequency resource unit with a smallest number in a frequency domain resource configured by the system. For example, if the frequency domain unit with a smallest number in the frequency domain resource is a frequency domain unit numbered "0", and when the first PUCCH is repeatedly transmitted and the repetition quantity N is 4, the resource occupied for the four times of transmission of the first PUCCH is offset by m2 frequency domain units relative to the frequency domain unit numbered "0".

The foregoing describes in detail the physical uplink control channel transmission method according to embodiments of this application with reference to FIG. 1 to FIG. 3. The following describes in detail apparatuses according to embodiments of this application with reference to FIG. 4 to FIG. 5.

FIG. 4 shows an apparatus 400 according to an embodiment of this application. The apparatus 400 may be a terminal device or a network device, or may be a chip in a terminal device or a network device. The apparatus 400 includes a communication unit 410.

In a possible implementation, the apparatus 400 is configured to perform procedures and steps corresponding to the terminal device in the foregoing method 300.

The communication unit 410 is configured to receive a first message.

The communication unit 410 is further configured to: when a dedicated physical uplink control channel PUCCH is not configured for a terminal device, repeatedly transmit a first PUCCH by using a repetition quantity N, where the dedicated PUCCH is configured by a network device for the terminal device based on higher layer signaling, and N is an integer greater than 1.

The first PUCCH carries feedback information, and the feedback information indicates whether the terminal device successfully receives the first message, or the feedback information is channel quality-related information determined based on the first message; or the first PUCCH is determined based on the first message.

The communication unit 410 may be configured to perform procedures and steps corresponding to the terminal device in S310 and S320 in the method 300.

In another possible implementation, the apparatus 400 is configured to perform procedures and steps corresponding to the network device in the foregoing method 300.

The communication unit 410 is configured to send a first message.

The communication unit 410 is configured to: when a dedicated physical uplink control channel PUCCH is not configured for a terminal device, repeatedly receive a first PUCCH by using a repetition quantity N, where the dedicated PUCCH is configured by a network device for the terminal device based on higher layer signaling, and N is an integer greater than 1.

The first PUCCH carries feedback information, and the feedback information indicates whether the terminal device successfully receives the first message, or the feedback information is channel quality-related information determined based on the first message; or the first PUCCH is determined based on the first message.

The communication unit 410 may be configured to perform procedures and steps corresponding to the network device in S310 and S320 in the method 300.

It should be understood that a specific process in which each unit performs a corresponding step in the foregoing method has been described in detail in the foregoing method embodiments. For brevity, details are not described herein.

It should be understood that the apparatus 400 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or another suitable component that supports the described functions.

The apparatus 400 in the foregoing solutions has a function of implementing corresponding steps performed by an access network device or a core network device in the foregoing methods. The function may be implemented by hardware, or may be implemented by hardware executing corresponding software. The hardware or software includes one or more modules corresponding to the foregoing functions. For example, the communication unit may be replaced by a transmitter and a receiver, and another unit, such as a processing unit, may be replaced by a processor, to separately perform a sending and receiving operation and a related processing operation in the method embodiments. In addition, the communication unit in the apparatus 400 may also include a sending unit and a receiving unit. For performing a receiving-related operation, a function of the communication unit may be understood as a receiving operation performed by the receiving unit. For performing a sending-related operation, a function of the communication unit may be understood as a sending operation performed by the sending unit.

In embodiments of this application, the apparatus in FIG. 4 may alternatively be a chip or a chip system, for example, a system on chip (system on chip, SoC). Correspondingly, a transceiver unit may be a transceiver circuit of the chip. This is not limited herein.

FIG. 5 shows an apparatus 500 according to an embodiment of this application. It should be understood that the apparatus 500 may be specifically the terminal device or the network device in the foregoing embodiments, and may be configured to perform steps and/or procedures corresponding to the terminal device or the network device in the foregoing method embodiments.

The apparatus 500 includes a processor 510, a transceiver 520, and a memory 530. The processor 510, the transceiver 520, and the memory 530 communicate with each other over an internal connection path. The processor 510 may implement functions of the processing unit in various possible implementations of the apparatus 400, and the transceiver 520 may implement functions of the communication unit 410 in various possible implementations of the apparatus 400. The memory 530 is configured to store instructions, and the processor 510 is configured to execute the instructions stored in the memory 530. Alternatively, the processor 510 may invoke the stored instructions to implement functions of the processor in the apparatus 400, to control the transceiver 520 to send a signal and/or receive a signal.

Optionally, the memory 530 may include a read-only memory and a random access memory, and provide instructions and data for the processor. A part of the memory may further include a non-volatile random access memory. For example, the memory may further store information about a device type. The processor 510 may be configured to execute the instructions stored in the memory. When the processor 510 executes the instructions stored in the memory, the processor 510 is configured to perform the steps and/or procedures in the foregoing method embodiments corresponding to the access network device or the core network device.

In a possible implementation, the apparatus 500 is configured to perform procedures and steps corresponding to the terminal device in the foregoing method 300.

The processor 510 controls the transceiver 520 to perform the following steps:

receiving a first message; and
when a dedicated physical uplink control channel PUCCH is not configured for a terminal device, repeatedly transmitting a first PUCCH by using a repetition quantity N, where the dedicated PUCCH is configured by a network device for the terminal device based on higher layer signaling, and N is an integer greater than 1;

The first PUCCH carries feedback information, and the feedback information indicates whether the terminal device successfully receives the first message, or the feedback information is channel quality-related information determined based on the first message; or the first PUCCH is determined based on the first message.

In another possible implementation, the apparatus 500 is configured to perform procedures and steps corresponding to the network device in the foregoing method 300.

The processor 510 controls the transceiver 520 to perform the following steps:

sending a first message; and

when a dedicated physical uplink control channel PUCCH is not configured for a terminal device, repeatedly receiving a first PUCCH by using a repetition quantity N, where the dedicated PUCCH is configured by a network device for the terminal device based on higher layer signaling, and N is an integer greater than 1.

The first PUCCH carries feedback information, and the feedback information indicates whether the terminal device successfully receives the first message, or the feedback information is channel quality-related information determined based on the first message; or the first PUCCH is determined based on the first message.

It should be understood that a specific process in which each component performs a corresponding step in the foregoing method has been described in detail in the foregoing method embodiments. For brevity, details are not described herein.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, the steps of the foregoing methods may be completed using an integrated logic circuit of hardware in the processor or instructions in a form of software. The steps of the methods disclosed with reference to embodiments of this application may be directly performed by a hardware processor, or may be performed by a combination of hardware and software units in the processor. The software unit may be located in a mature storage medium in the art, such as a random access memory, a flash memory, a read-only memory, a programmable read-only memory, an electrically erasable programmable memory, or a register. The storage medium is located in the memory, and the processor performs the instructions in the memory, and completes the steps of the foregoing methods in combination with hardware of the processor. To avoid repetitions, details are not described herein.

An embodiment of this application provides a method for determining a repetition quantity of a PUCCH, and a PUCCH reply for an Msg4.

Embodiment 1: A new PUCCH resource table is configured, a coverage enhancement feature supported by UE is obtained based on an Msg1 or an Msg3, and a new table is used, where the new table carries a repetition quantity. Further, to avoid a conflict between a PUCCH resource for repeated transmission and a legacy PUCCH resource, a new offset value may be configured.

Embodiment 2: The repetition quantity of the PUCCH is determined based on a repetition quantity of an Msg3. For example, the repetition quantity of the PUCCH is the same as the repetition quantity of the Msg3 or the repetition quantity of the Msg3 divided by 2 or the like.

Embodiment 3: A coverage enhancement feature supported by UE is obtained based on an Msg1 or an Msg3, and new DCI (carrying a repetition quantity) is used for scheduling a PDSCH, and indicates a quantity for retransmission. To be specific, the quantity for retransmission is calculated in a preset manner, for example, the quantity for retransmission is $2^n$ or a specific value of a field. Alternatively, the new DCI is used for detection, and a previous DCI format does not need to be detected, so that blind detection is not needed.

Embodiment 4: An MCS is reduced to provide redundant space, and a repetition quantity is indicated. In one possibility, the redundant space is provided, and in another possibility, redundant bits are provided. The repetition quantity may be indicated in the two manners.

Embodiment 1: Configure a new PUCCH resource table

Core idea: The new PUCCH table is configured, and the table carries the repetition quantity of the PUCCH or a quantity of symbols after repetition.

Step 1: Optionally, UE notifies, based on an Msg1, an Msg3, or the like, a gNB that a coverage enhancement feature is supported/needed. An example of a notification manner is as follows. For example, the notification manner is implemented using a preamble resource group (that is, UE that supports/needs coverage enhancement accesses on one group of preamble resources, and UE that does not support/need coverage enhancement accesses on another group of preamble resources), a DMRS configuration format of the Msg3/uplink control information carried in the Msg3, a quantity for repeated transmission of the Msg3, or the like.

Step 2: After the gNB is informed of indicating coverage enhancement, and when a PUCCH for replying with the Msg4 is indicated, a method for indicating a repetition quantity may be further divided into the following two methods:

Method 1: An existing table is reused, and a repetition quantity N is additionally added and indicated in SIB information for UE that needs the coverage enhancement. For UE that needs the coverage enhancement, for example, UE that repeatedly transmits an Msg3 for at least two times, the PUCCH is transmitted by using the repetition quantity N. For UE that supports the coverage enhancement and the Msg3 is not repeated, repeated transmission of the PUCCH is not performed. Therefore, resources are saved.

Method 2: When the gNB sends and schedules DCI of the Msg4, a corresponding PUCCH resource table is a new table. In one possibility, CE UE separately indicates one pucch-ResourceCommon2, and configures a table, for example, Table 5 (indicating a repetition quantity) and Table 6 (indicating a quantity of symbols after repetition) corresponding to the parameter. In one possibility, another parameter of an original pucch-ResourceCommon is reused, and only a column of a repetition quantity is configured at the end of an original table. In a CE scenario, the repetition quantity of the PUCCH is obtained based on the configured column of a repetition quantity. Specifically, during use, the PUCCH may be repeatedly transmitted for only UE that needs the coverage enhancement (UE with a repeated Msg3).

Further, because some content of the original table is reused, to reduce a conflict between a resource in a PUCCH repetition scenario and an original resource used by the UE, resources used for transmission may be further distinguished. For Method 1, a resource for initial transmission remains unchanged, an offset is added for a resource for retransmission, and the offset may be configured in SIB information, so that retransmission and PUCCH initial transmission of another UE are staggered. For Method 2, an offset may be configured in the table, so that a resource for repeated transmission is different from a resource for PUCCH initial transmission of another UE.

Technical effects of Embodiment 1:
Solutions according to embodiments of this application provide a method for determining a repetition quantity of a PUCCH for replying with an Msg4.

Improvement in Embodiment 1 different from that in a conventional technology:
Solutions according to embodiments of this application provide a method for determining a repetition quantity of a PUCCH, that is, the repetition quantity or a quantity of symbols after repetition are indicated in a system message.

Embodiment 2: The repetition quantity of the PUCCH is determined based on the repetition quantity of the Msg3.

Core idea: If the Msg3 has been repeatedly transmitted, there is a high probability that a PUCCH for an Msg4 needs to be enhanced. Therefore, a repetition quantity of the PUCCH for the Msg4 may be determined based on the repetition quantity of the Msg3 or whether the Msg3 is repeated.

The repetition quantity of the PUCCH for replying with the Msg4 is determined based on the repetition quantity of the Msg3. If the Msg3 has been repeatedly transmitted, it indicates that a base station has already known that the UE supports coverage enhancement. Therefore, the repetition quantity may be implicitly obtained from the base station and the UE separately in the following method. Specific determining methods may be as follows:

Method 1: Repetition quantity=Repetition quantity of Msg3. It can be seen that, if the Msg3 is transmitted only once, an obtained PUCCH is also transmitted only once. This is compatible with the conventional technology. If the Msg3 is repeatedly transmitted twice or four times, a PUCCH is also repeatedly transmitted twice or four times.

Method 2: Repetition quantity=Repetition quantity of Msg3/n or $\lceil \text{Repetition quantity of Msg3/n} \rceil$ or $\lfloor \text{Repetition quantity of Msg3/n} \rfloor$. Optionally, n=2.

Method 3: Repetition quantity=Repetition quantity of Msg3-k. k is a preconfigured value, and optionally, k=2.

The repetition quantity of the Msg3 in the foregoing methods 1 to 3 may be replaced with "a repetition quantity for retransmission of the Msg3" or "a total quantity for transmission of the Msg3 (that is, a sum of a repetition quantity for first transmission and a repetition quantity for retransmission)".

In addition to determining of the repetition quantity for retransmission, locations of a frequency domain resource, a code domain resource, and the like that are used for repeated transmission are the same as those of a frequency domain resource and a code domain resource that are used for the first transmission. To avoid a conflict with a PUCCH resource in the conventional technology, one PRB offset is added to the frequency domain resource that is reused.

Technical effects of Embodiment 2:
Solutions according to embodiments of this application provide a method for determining a repetition quantity of a PUCCH for replying with an Msg4.

Improvement in Embodiment 2 different from that in a conventional technology/another embodiment:
The repetition quantity of the PUCCH is determined based on a repetition quantity of an Msg3. The quantity is implicitly determined, to avoid extra configuration signaling or dynamic signaling and reduce overheads.

Embodiment 3: A coverage enhancement feature of UE is obtained based on an Msg1 or the Msg3, and new DCI (carrying the repetition quantity) is used for scheduling a PDSCH, and indicates a quantity for retransmission.

Core idea: Because there is no RRC configuration, the repetition quantity is determined based on only a field carried in the DCI.

Step 1: Optionally, the UE notifies, based on the Msg1, the Msg3, or the like, a gNB that the coverage enhancement feature is supported/needed. An example of a notification manner is as follows. For example, the notification manner is implemented using a preamble resource group (that is, UE that supports/needs coverage enhancement accesses on one group of preamble resources, and UE that does not support/need coverage enhancement accesses on another group of preamble resources), a DMRS configuration format of the Msg3/uplink control information carried in the Msg3, a quantity for repeated transmission of the Msg3, or the like. (Same as Step1 in Embodiment 1)

Step 2: A base station indicates the repetition quantity of the PUCCH based on information about the DCI, and adds one new field. Because there is no RRC configuration information, the repetition quantity needs to be directly obtained from a value x of the new field.

For example, Repetition quantity=2^x. That is, when x=3, the repetition quantity is 2^3=8.

For example, Repetition quantity=2+x. "2" is only a preconfigured value. That is, when x=3, the repetition quantity is 5.

Step 3: The UE transmits the PUCCH based on an indicated repetition quantity. Resources (a frequency domain resource and a code domain resource) used for repeated transmission are the same as those used for initial transmission. To avoid a conflict with a PUCCH resource in the conventional technology, one PRB offset is added to the frequency domain resource that is reused.

Difference from discussed Option 2 currently: In current discussion of Option 2, a value array of a repetition quantity is configured through an RRC, and a value of a new field is used for determining the repetition quantity from the array. However, because the PUCCH for the Msg4 does not have RRC configuration information, the repetition quantity can only be obtained directly.

Technical effects of Embodiment 3:

Solutions according to embodiments of this application provide a method for determining a repetition quantity of a PUCCH for replying with an Msg4.

Improvement of Embodiment 3 different from that in a conventional technology/another embodiment:

The repetition quantity is directly determined based on a field in DCI.

Embodiment 4: An MCS is reduced to provide redundant space, to indicate the repetition quantity.

Core idea: For UE that needs coverage improvement, an original MCS with a high bit rate is no longer applicable. In this way, an MCS table is reduced to provide redundant space, to carry the repetition quantity.

Step 1: An MCS table in a CE scenario is defined, and when the DCI is used for scheduling the Msg4, a resource of a PUCCH for replying with the Msg4 is indicated.

In one possibility, redundant space is provided in a manner shown in Table 2, to be specific, one new row of PUCCH repetition is added, and an MCS index in each row indicates a repetition quantity that is carried. In another possibility, a quantity of MCS rows is reduced to provide redundant bits. As shown in Table 3 and Table 4, original 32 rows are reduced to 16 rows or 8 rows, so that an original 5-bit MCS indication occupies only 4 bits or 3 bits for MCS indication. Saved 1 bit or 2 bits may indicate a repetition quantity.

Step 2: A newly defined MCS table is used only when coverage enhancement needs to be performed or there is UE that supports coverage enhancement. Otherwise, MCS indication information is interpreted based on the conventional technology.

For example, when an Msg3 is repeatedly transmitted, the UE needs coverage enhancement and supports the coverage enhancement. For details, refer to the new MCS table.

For example, the UE notifies, based on an Msg1, the Msg3, or the like, that a gNB supports a coverage enhancement feature, and the UE may also use the new MCS table.

Technical effects of Embodiment 4:

Solutions according to embodiments of this application provide a method for determining a repetition quantity of a PUCCH for replying with an Msg4.

Improvement of Embodiment 4 different from that in a conventional technology/another embodiment:

An MCS table is reduced to provide space to indicate the repetition quantity, to perform a method of dynamically indicating the repetition quantity of the PUCCH.

It should be noted that, in implementations of this application, "protocol" may refer to a standard protocol in the communication field.

It should be further noted that, in embodiments of this application, "predefining" may be implemented by pre-storing, in a device (for example, including a station and an access point), corresponding code or a table, or may be implemented in another manner that may be used for indicating related information. A specific implementation of the "predefining" is not limited in this application. For example, the predefining may be defined in a protocol.

It should also be noted that "at least one" refers to one or more; and "at least one of A and B", which is similar to "A and/or B", describes an association relationship between associated objects, and indicates that three relationships may exist. For example, at least one of A and B may indicate three cases: only A exists, both A and B exist, and only B exists.

A person of ordinary skill in the art may be aware that, in combination with the examples described in embodiments disclosed in this specification, units and algorithm steps may be implemented by electronic hardware or a combination of computer software and electronic hardware. Whether these functions are performed in a hardware or software manner depends on a specific application and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein.

Further embodiments of the present invention are provided in the following. It should be noted that the numbering used in the following section does not necessarily need to comply with the numbering used in the previous sections.

Embodiment 1. A physical uplink control channel transmission method, comprising:

receiving a first message; and
when a dedicated physical uplink control channel PUCCH is not configured for a terminal device, repeatedly transmitting a first PUCCH by using a repetition quantity N, wherein the dedicated PUCCH is configured by a network device for the terminal device based on higher layer signaling, and N is an integer greater than 1, and the first PUCCH carries feedback information, and the feedback information indicates whether the terminal device successfully receives the first message, or the feedback information is channel quality-related information determined based on the first message; or the first PUCCH is determined based on the first message.

Embodiment 2. The method according to embodiment 1, wherein the first message comprises first indication information, and the first indication information is used for determining the repetition quantity N.

Embodiment 3. The method according to embodiment 2, wherein
the first indication information comprises a first index, the first index indicates the repetition quantity N, the first index further indicates a first modulation and coding scheme MCS, and the first MCS is used for demodulating at least a part of content of the first message.

Embodiment 4. The method according to embodiment 3, wherein the first index is an index in an MCS table, and a maximum quantity of bits occupied by the first index is less than 5.

Embodiment 5. The method according to embodiment 2, wherein the first indication information is carried in a first part of bits in an MCS field of downlink control information DCI; and

the MCS field further comprises a second part of bits, the second part of bits carries MCS information indicating a first MCS, and the first MCS is used for demodulating at least a part of content of the first message, wherein
the first indication information comprises a first index indicating the repetition quantity N, the MCS information comprises a second index indicating the first MCS, the second index is an index in an MCS table, and a maximum quantity of bits occupied by the second index is less than 5.

Embodiment 6. The method according to embodiment 2, wherein the first indication information indicates a first value, and the first value is related to the repetition quantity N.

Embodiment 7. The method according to embodiment 6, wherein the first value and the repetition quantity N meet any one of the following relationships: $N=2^x$; or $N=2+x$, wherein x is the first value.

Embodiment 8. The method according to embodiment 2, wherein the first indication information indicates a total quantity of symbols occupied for repeated transmission of the first PUCCH, and the repetition quantity N is related to the total quantity of symbols and a quantity of symbols occupied for single transmission of the first PUCCH.

Embodiment 9. The method according to embodiment 2, wherein the first indication information indicates the repetition quantity N.

Embodiment 10. The method according to embodiment 9, wherein the first indication information is carried in a system message.

Embodiment 11. The method according to any one of embodiments 2 to 9, wherein the first indication information is carried in DCI.

Embodiment 12. The method according to embodiment 1, wherein the first message is a message 4 in a random access process; and
the repetition quantity N is related to a repetition quantity M used by the terminal device to repeatedly send a message 3 in the random access process, and M is a positive integer greater than 1.

Embodiment 13. The method according to embodiment 12, wherein

the repetition quantity N is equal to the repetition quantity M; or
the repetition quantity N is related to the repetition quantity M and a preset value.

Embodiment 14. The method according to embodiment 12 or 13, wherein

the repetition quantity M is a repetition quantity for initial transmission of the message 3;
the repetition quantity M is a repetition quantity for retransmission of the message 3; or
the repetition quantity M is a sum of a repetition quantity for initial transmission of the message 3 and a repetition quantity for retransmission of the message 3.

Embodiment 15. The method according to any one of embodiments 1 to 14, wherein the method further comprises:
sending capability information, wherein the capability information indicates that the terminal device supports or is in a coverage enhancement scenario.
Embodiment 16. The method according to embodiment 15, wherein the capability information comprises at least one of the following:

a preamble sequence that is in a message 1 in the random access process and that corresponds to the coverage enhancement scenario;
a format of a demodulation reference signal DMRS that is in the message 3 in the random access process and that corresponds to coverage enhancement, or uplink control information that is in the message 3 and that corresponds to coverage enhancement; or
the repetition quantity M for repeated sending of the message 3 in the random access process, wherein M is a positive integer greater than 1.

Embodiment 17. The method according to any one of embodiments 1 to 16, wherein

in N times of repeated transmission of the first PUCCH, a resource occupied for an $(N-1)^{th}$ time of transmission of the first PUCCH is offset by m1 frequency domain units relative to a resource occupied for first transmission, wherein the $(N-1)^{th}$ time of transmission is transmission after the first transmission, and m1 is a positive integer greater than 0; or
a resource occupied for an $N^{th}$ time of repeated transmission of the first PUCCH is offset by m2 frequency domain units relative to a resource on which a reference frequency domain unit is located, wherein m2 is a positive integer greater than 0.

Embodiment 18. A physical uplink control channel transmission method, comprising:

sending a first message; and
when a dedicated physical uplink control channel PUCCH is not configured for a terminal device, repeatedly receiving a first PUCCH by using a repetition quantity N, wherein the dedicated PUCCH is configured by a network device for the terminal device based on higher layer signaling, and N is an integer greater than 1, and
the first PUCCH carries feedback information, and the feedback information indicates whether the terminal device successfully receives the first message, or the feedback information is channel quality-related information determined based on the first message; or the first PUCCH is determined based on the first message.

Embodiment 19. The method according to embodiment 18, wherein the first message comprises first indication information, and the first indication information is used for determining the repetition quantity N.
Embodiment 20. The method according to embodiment 19, wherein
the first indication information comprises a first index, the first index indicates the repetition quantity N, the first index further indicates a first modulation and coding scheme MCS, and the first MCS is used for demodulating at least a part of content of the first message.
Embodiment 21. The method according to embodiment 19, wherein the first indication information is carried in a first part of bits in an MCS field of downlink control information DCI; and

the MCS field further comprises a second part of bits, the second part of bits carries MCS information indicating a first MCS, and the first MCS is used for demodulating at least a part of content of the first message, wherein
the first indication information comprises a first index indicating the repetition quantity N, the MCS information comprises a second index indicating the first MCS, the second index is an index in an MCS table, and a maximum quantity of bits occupied by the second index is less than 5.

Embodiment 22. The method according to embodiment 19, wherein the first indication information indicates a first value, and the first value is related to the repetition quantity N.

Embodiment 23. The method according to embodiment 19, wherein the first indication information indicates a total quantity of symbols occupied for repeated transmission of the first PUCCH, and the repetition quantity N is related to the total quantity of symbols and a quantity of symbols occupied for single transmission of the first PUCCH.

Embodiment 24. The method according to embodiment 19, wherein the first indication information indicates the repetition quantity N.

Embodiment 25. The method according to embodiment 24, wherein the first indication information is carried in a system message.

Embodiment 26. The method according to embodiment 18, wherein the first message is a message 4 in a random access process; and

the repetition quantity N is related to a repetition quantity M used by the terminal device to repeatedly send a message 3 in the random access process, and M is a positive integer greater than 1.

Embodiment 27. The method according to embodiment 26, wherein

the repetition quantity N is equal to the repetition quantity M; or
the repetition quantity N is related to the repetition quantity M and a preset value.

Embodiment 28. The method according to embodiment 26 or 27, wherein

the repetition quantity M is a repetition quantity for initial transmission of the message 3;
the repetition quantity M is a repetition quantity for retransmission of the message 3; or
the repetition quantity M is a sum of a repetition quantity for initial transmission of the message 3 and a repetition quantity for retransmission of the message 3.

Embodiment 29. The method according to any one of embodiments 18 to 28, wherein the method further comprises:
receiving capability information, wherein the capability information indicates that the terminal device supports or is in a coverage enhancement scenario.

Embodiment 30. The method according to any one of embodiments 18 to 29, wherein

in N times of repeated transmission of the first PUCCH, a resource occupied for an $(N-1)^{th}$ time of transmission of the first PUCCH is offset by m1 frequency domain units relative to a resource occupied for first transmission, wherein the $(N-1)^{th}$ time of transmission is transmission after the first transmission, and m1 is a positive integer greater than 0; or
a resource occupied for an $N^{th}$ time of repeated transmission of the first PUCCH is offset by m2 frequency domain units relative to a reference frequency domain unit, wherein m2 is a positive integer greater than 0.

Embodiment 31. A terminal device, comprising:

a memory, configured to store computer instructions; and
a processor, configured to invoke the computer instructions stored in the memory, to perform the method according to any one of embodiments 1 to 17.

Embodiment 32. A network device, comprising:

a memory, configured to store computer instructions; and
a processor, configured to invoke the computer instructions stored in the memory, to perform the method according to any one of embodiments 18 to 30.

Embodiment 33. A computer-readable storage medium, configured to store computer instructions, wherein the computer instructions are used for implementing the method according to any one of embodiments 1 to 17, or the method according to embodiments 18 to 30.

Embodiment 34. A computer program product, comprising computer instructions, wherein the computer instructions are used for implementing the method according to any one of embodiments 1 to 17, or the method according to embodiments 18 to 30.

Embodiment 35. A chip system, wherein the chip comprises:

a memory, configured to store instructions; and
a processor, configured to invoke the instructions from the memory and run the instructions, to enable a communication device on which the chip system is installed to perform the method according to any one of embodiments 1 to 17, or the method according to any one of embodiments 18 to 30.

In embodiments of this application, it should be understood that the disclosed system, apparatus, and method may be implemented in another manner. For example, the described apparatus embodiments are merely examples. For example, the unit division is merely logical function division and may be other division during actual implementation. For example, a plurality of units or components may be combined or integrated into another system, or some features may be ignored, or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions in this embodiment.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical uplink control channel transmission method (300) performed by a terminal device or a chip in a terminal device, comprising:

   receiving (310) a first message;
   when a dedicated physical uplink control channel, PUCCH, is not configured for the terminal device, repeatedly transmitting (320) a first PUCCH by using a repetition quantity N, wherein the dedicated PUCCH is configured by a network device for the terminal device based on higher layer signaling, and N is an integer greater than 1, and the first PUCCH carries feedback information, and the feedback information indicates whether the terminal device successfully receives the first message; and
   sending capability information, wherein the capability information indicates that the terminal device supports a coverage enhancement scenario.

2. The method according to claim 1, wherein the first message comprises first indication information, and the first indication information is used for determining the repetition quantity N.

3. The method according to claim 2, wherein the first indication information indicates a first value, the first value is related to the repetition quantity N; or, the first indication information indicates the repetition quantity N.

4. The method according to claim 2 or 3, wherein the first indication information is carried in downlink control information, DCI, and the DCI is carried in the first message.

5. The method according to claim 4, wherein the first indication information is carried in an existing field in the DCI.

6. The method according to any one of claims 1 to 5, wherein the first message is a message 4 in a random access process; or, the first message is a system message and the system message is a system information block, SIB.

7. A physical uplink control channel transmission method (300) performed by a network device or a chip in a network device, comprising:

sending (301) a first message;
when a dedicated physical uplink control channel, PUCCH, is not configured for a terminal device, repeatedly receiving (320) a first PUCCH by using a repetition quantity N, wherein the dedicated PUCCH is configured by the network device for the terminal device based on higher layer signaling, and N is an integer greater than 1, and the first PUCCH carries feedback information, and the feedback information indicates whether the terminal device successfully receives the first message; and
receiving capability information, wherein the capability information indicates that the terminal device supports a coverage enhancement scenario.

8. The method according to claim 7, wherein the first message comprises first indication information, and the first indication information is used for determining the repetition quantity N.

9. The method according to claim 8, wherein the first indication information indicates a first value, the first value is related to the repetition quantity N; or, the first indication information indicates the repetition quantity N.

10. The method according to claim 8 or 9, wherein the first indication information is carried in downlink control information, DCI, and the DCI is carried in the first message.

11. The method according to claim 10, wherein the first indication information is carried in an existing field in the DCI.

12. The method according to any one of claims 7 to **11,** wherein the first message is a message 4 in a random access process; or, the first message is a system message and the system message is a system information block, SIB.

13. An apparatus (400), comprising:

a memory, configured to store computer instructions; and
a processor, configured to invoke the computer instructions stored in the memory, to perform the method according to any one of claims 1 to 7.

14. An apparatus (400), comprising:

a memory, configured to store computer instructions; and
a processor, configured to invoke the computer instructions stored in the memory, to perform the method according to any one of claims 8 to 13.

15. A computer-readable storage medium, configured to store computer instructions, wherein the computer instructions are used for implementing the method according to any one of claims 1 to 6.

FIG. 1

S210: System message

S220: Message 1 (Msg1)

S230: Message 2 (Msg2)

S240: Message 3 (Msg3)

S250: Message 4 (Msg4)

S260: Feedback information

Terminal device

Network device

FIG. 2

<u>300</u>

```
┌──────────┐                              ┌──────────┐
│ Terminal │                              │ Network  │
│  device  │                              │  device  │
└──────────┘                              └──────────┘
     │                                          │
     │          S310: First message             │
     │◄─────────────────────────────────────────│
     │                                          │
     │    S320: Repeatedly transmit a first     │
     │   PUCCH by using a repetition quantity N │
     │─────────────────────────────────────────►│
     │                                          │
     │                                          │
```

FIG. 3

```
┌──────────────────────────────────────────┐
│            Apparatus 400                  │
│                                           │
│    ┌──────────────────────────────┐       │
│    │   Communication unit 410     │       │
│    └──────────────────────────────┘       │
│                                           │
└──────────────────────────────────────────┘
```

FIG. 4

```
┌──────────────────────────────────────────┐
│            Apparatus 500                  │
│                                           │
│              ┌──────────┐                 │
│              │Processor │                 │
│              │   510    │                 │
│              └──────────┘                 │
│                   │                       │
│   ─────────────────────────────────────   │
│        │                      │           │
│   ┌──────────┐         ┌──────────┐       │
│   │Memory 530│         │Transceiver│      │
│   └──────────┘         │   520    │       │
│                        └──────────┘       │
└──────────────────────────────────────────┘
```

FIG. 5

**REFERENCES CITED IN THE DESCRIPTION**

**Patent documents cited in the description**

- CN 202110265678

- CN 202110359884X